# EUROPEAN PATENT APPLICATION

(11) **EP 4 832 611 A1**
(43) Date of publication of application: **28.10.2026**
(21) Application number: 24916558.0
(22) Date of filing: 12.11.2024
(51) Int. Cl.: H04W 72/0446

(54) **COMMUNICATION METHOD AND COMMUNICATION APPARATUS**

(30) Priority: 09.01.2024 CN 202410034830
(71) Applicant: Huawei Technologies Co., Ltd., Shenzhen, Guangdong 518129 (CN)
(72) Inventor: FU, Jinshu, Shenzhen, Guangdong 518129 (CN); TANG, Hao, Shenzhen, Guangdong 518129 (CN); ZHANG, Xi, Shenzhen, Guangdong 518129 (CN); WEI, Dongdong, Shenzhen, Guangdong 518129 (CN)
(74) Representative: Isarpatent
(86) International application number: PCT/CN2024/131503
(87) International publication number: WO 2025/148508

(57) **Abstract**

This application provides a communication method and a communication apparatus. The communication method includes: determining a first time-frequency resource, where the first time-frequency resource is used to carry a first reference signal and first data, and the first reference signal is used to determine channel state information CSI; and on the first time-frequency resource, receiving the first reference signal to determine the CSI, and receiving the first data. According to the method in embodiments of this application, a delay of measuring CSI and receiving data by a communication device is reduced, thereby reducing a delay of working of the communication device in an active state.

## Description

This application claims priority to Chinese Patent Application No. 202410034830.X, filed with the China National Intellectual Property Administration on January 9, 2024 and entitled "COMMUNICATION METHOD AND COMMUNICATION APPARATUS", which is incorporated herein by reference in its entirety.

### TECHNICAL FIELD

This application relates to the communication field, and more specifically, to a communication method and a communication apparatus.

### BACKGROUND

In the release 18 (release 18) for a 5th generation (5th generation, 5G) mobile communication system, research has been initiated on low-power wake-up signals (low-power wake-up signals, LP-WUSs), to evaluate the potential of communication devices such as terminal devices or network devices equipped with low-power wake-up radio (low-power wake-up radio, LP-WUR) to reduce power consumption. Generally, a communication device consumes power on the order of tens of milliwatts even when not transmitting or sending any data. Such idle power consumption results from the requirement that the communication device periodically measures and detects a potential paging message. If the communication device detects an LP-WUS signal, the communication device continues to decode the paging message, and wakes up from a sleep state to an active state for operation. If the communication device detects no LP-WUS signal, the communication device returns to the sleep state, and waits until a next occasion for receiving an LP-WUS signal.

However, when a communication device in a connected state wakes up from a sleep state to an active state for operation, user movement of the communication device like a terminal device, may cause uplink and downlink beam misalignment; or because channel information has become outdated, the communication device needs to re-measure the channel information; or synchronization times out, the communication device needs to resend a synchronization signal block (synchronization signal/PBCH block, SSB) to perform time-frequency domain synchronization, or the like. In this case, the communication device needs to perform resynchronization, channel measurement, measurement feedback, and the like. This process is time-consuming and incurs a high delay for measurement feedback delay, which ultimately causing a failure to feed back channel changes in time.

### SUMMARY

This application provides a communication method and a communication apparatus. A reference signal and data are carried on a same time-frequency resource, to reduce a delay of measuring CSI and receiving data by a communication device, so as to reduce a delay of working of the communication device in an active state.

According to a first aspect, a communication method is provided. The method may be applied to a network device or a terminal device, or a component of the network device or the terminal. For brevity, an example in which the method is performed by the network device or the terminal device is used for description herein.

The communication method in the first aspect may be applied to a communication system including a network device and a terminal device, for example, a communication system in a standalone (standalone, SA) scenario or a communication system in a dual connectivity (dual connectivity, DC) scenario.

For example, in the communication system in the SA scenario, a terminal device is connected to a single network device, and the network device connected to the terminal device and a core network connected to the network device are of a same standard. For example, the core network is a 5G core network, the network device is correspondingly a 5G base station, and the 5G base station is directly connected to the 5G core network; or the core network is a 6G core network, the network device is correspondingly a 6G base station, and the 6G base station is directly connected to the 6G core network.

For example, in the DC scenario, a terminal device is connected to network devices of different standards or a same standard, and this is applicable to UE in a connected state. For example, when a core network is a 5G core network, the terminal device may be connected to a 5G base station and a 6G base station, where the 5G base station serves as a main station, and the 6G base station serves as a secondary station. For another example, when a core network is a 6G core network, the terminal device may be connected to a 5G base station and a 6G base station, where the 6G base station serves as a main station, and the 5G base station serves as a secondary station. For another example, when a core network is a 6G core network, the terminal device may be connected to two 6G base stations, that is, both a main station and a secondary station are 6G base stations.

It should be noted that a communication system applicable to embodiments of this application is not limited thereto, and any communication that can implement functions of the foregoing network elements is applicable to embodiments of this application. The communication system in embodiments of this application may alternatively be a non-terrestrial network (non-terrestrial network, NTN) communication system, for example, a satellite communication network, a high altitude platform station (high altitude platform station, HAPS) system, or an air-to-ground network. For example, a satellite communication system may include a satellite, and a terminal device on the satellite communicates with a terrestrial base station. The satellite may be a non-terrestrial base station, a non-terrestrial device, or the like, for example, an uncrewed aerial vehicle, a hot air balloon, a low-earth orbit satellite, a medium-earth orbit satellite, or a high-earth orbit satellite. The NTN communication system may be independently deployed, or may be used as a supplement to a terrestrial network. It should be further understood that the foregoing names are defined merely for ease of distinguishing between different functions, and should not constitute any limitation on this application. This application does not exclude a possibility of using other names in a 6G network and another future network.

The method includes: determining a first time-frequency resource, where the first time-frequency resource is used to carry a first reference signal and first data, and the first reference signal is used to determine channel state information CSI; and on the first time-frequency resource, receiving the first reference signal to determine the CSI, and receiving the first data.

Optionally, in embodiments of this application, the first reference signal may be a channel state information-reference signal (channel state information-reference signal, CSI-RS), or may be another reference signal that may be used to determine the channel state information (channel state information, CSI), for example, a demodulation reference signal (demodulation reference signal, DMRS). When the terminal device performs the communication method in the first aspect, the first data may be downlink data transmitted on a physical downlink shared channel (physical downlink shared channel, PDSCH). When the network device performs the communication method in the first aspect, the first data may be uplink data transmitted on a physical uplink shared channel (physical uplink shared channel, PUSCH).

Optionally, the CSI may include a CSI resource index (index), a rank indicator (rank indicator, RI), a channel quality indicator (channel quality indicator, CQI), and the like. To reduce a quantity of bits for feedback, the network device may select one or more optimal CQIs that may be reported in sub-band CQIs. Optionally, the CSI may further include a precoding matrix indicator (precoding matrix indicator, PMI), where the PMI may be used to feed back a precoding matrix present when a pilot signal power offset is 0, and may also reduce bit overheads for feedback.

It should be understood that when a communication device works in an active state, the communication device needs to send one or more SSBs to perform time-frequency domain synchronization. Then, the communication device (for example, the terminal device) receives downlink control information (downlink control information, DCI) from another communication device (for example, the network device). Finally, the communication device receives the first reference signal used to determine the channel state information (channel state information, CSI) and data on a channel, and feeds back the channel state information CSI and a data decoding result.

However, when a communication device in a connected state wakes up from a sleep state to an active state to work, due to outdated channel information, the communication device needs to re-measure channel information, or due to movement of a user of the communication device like a terminal device, uplink and downlink beams may not be aligned, or due to synchronization timeout, the communication device needs to resend a synchronization signal block (synchronization signal/PBCH block, SSB) to perform time-frequency domain synchronization, or the like. In this case, the communication device needs to re-perform synchronization, channel measurement, measurement feedback, and the like. A delay of the foregoing steps is long. As a result, the communication device cannot feed back a channel change in time.

Therefore, in comparison with a solution in which the first reference signal and the first data are respectively carried on a plurality of different time domain resources that have a time interval, in the technical solutions of this application, the first reference signal and the first data are carried on a same time-frequency resource, to reduce a delay of measuring the CSI and receiving the data by the communication device, so as to reduce a total delay of re-performing synchronization, channel measurement, measurement feedback, and the like by the communication device.

Optionally, the communication method shown in the first aspect can be used only after being activated through triggering by the communication device, or may not need triggering. For example, when time domain positions and/or frequency domain positions of the first reference signal and the first data are configured in DCI that needs to be sent by the communication device, the communication device may use, by default, the communication method shown in the first aspect. For another example, the communication device may indicate, by using DCI, to work in the active state according to the communication method shown in the first aspect. For another example, the communication device may use, through reporting of an event of the communication device, the communication method shown in the first aspect. For example, a condition for reporting the event may be an increase or a decrease of a measured channel path loss, a change in a user mobility measurement result of the terminal device, the foregoing outdated channel information, the foregoing synchronization timeout, or the like.

With reference to the first aspect, in some implementations of the first aspect, the first time-frequency resource is included in one transmission time interval (transmission time interval, TTI), or included in one slot, or included in one symbol.

It should be understood that, in a wireless communication system, data or information may be carried by using a time-frequency resource. The time-frequency resource may include a resource in time domain and a resource in frequency domain. The resource in time domain may include one or more time domain units. One time domain unit may be one symbol, one mini-slot (mini-slot), one slot (slot), one transmission time interval (transmission time interval, TTI), or one subframe (subframe). Duration of one subframe in time domain may be one millisecond (ms). One slot includes 14 symbols. One mini-slot may include at least one symbol (for example, two symbols, seven symbols, 14 symbols, or any quantity of symbols fewer than or equal to 14 symbols).

In embodiments of this application, time domain positions for the communication device to receive the first reference signal and the first data are in a same time domain unit, for example, in a same TTI, a same slot, or a same symbol. In addition, preferably, there is no time interval or delay between the time domain positions for receiving the first reference signal and the first data. For example, being in the same slot is used as an example. The slot may include 14 symbols. The communication device may receive the first reference signal in first k symbols, and may start to receive the first data from another communication device since a j^{th} symbol, where k is a positive integer, and j is a positive integer greater than k. Preferably, in embodiments of this application, a value of j may be k+1. In this way, there is no time interval or delay between receiving the first reference signal and receiving the first data by the communication device. In other words, the communication device receives the first data immediately after receiving the first reference signal.

According to the foregoing method, the delay of measuring the CSI and receiving the data by the communication device is reduced, thereby reducing the total delay of re-performing synchronization, channel measurement, measurement feedback, and the like by the communication device.

With reference to the first aspect, in some implementations of the first aspect, a time domain position of the first reference signal on the first time-frequency resource precedes a time domain position of the first data on the first time-frequency resource.

According to the foregoing method, the time domain position of the first reference signal is at the front of the first time-frequency resource, so that the communication device can quickly obtain the CSI before feedback.

With reference to the first aspect, in some implementations of the first aspect, the determining the first time-frequency resource includes: receiving first indication information, where the first indication information indicates the time domain position and/or a frequency domain position for receiving the first data on the first time-frequency resource and the time domain position and/or a frequency domain position for receiving the first reference signal on the first time-frequency resource; and determining the first time-frequency resource based on the first indication information.

With reference to the first aspect, in some implementations of the first aspect, the first indication information is included in downlink control information DCI or radio resource control RRC signaling.

For example, the DCI may indicate the time domain position of the first data on the first time-frequency resource by using a value of K0, where K0 is a slot offset between receiving the DCI and scheduling a channel for transmission of the first data, in other words, receiving the first data, by the communication device. The DCI may indicate the time domain position of the first reference signal like a CSI-RS on the first time domain resource by using a value of K0+offset. When a value of offset is 0, the first reference signal and the first data are multiplexed on a same time domain unit resource and are located on different frequency domain resources. When a value of offset is greater than 0 or less than 0, the time domain position of the first reference signal precedes or follows the time domain position of the first data.

With reference to the first aspect, in some implementations of the first aspect, the first time-frequency resource is further used to carry first information, and the first information includes the CSI and a decoding result of the first data.

Specifically, the foregoing method is a process in which the communication device feeds back the CSI and the decoding result of the first data, so that a communication device that receives the first information can adjust a data transmission process on a channel based on the feedback result. When the communication device is the terminal device, the first information may be uplink information. When the communication device is the network device, the first information may be downlink information.

It should be understood that, in the foregoing method, by using the first time-frequency resource, the first reference signal and the first data are received, and the CSI and the decoding result of the first data are fed back. In other words, processes of CSI measurement, data receiving, and feedback performed by the communication device are all on a same time domain resource, so that a delay of an entire operation process of the communication device in the active state is reduced.

With reference to the first aspect, in some implementations of the first aspect, the method further includes: determining a second time-frequency resource, where the second time-frequency resource is used to carry first information, and the first information includes the CSI and a decoding result of the first data.

Specifically, the foregoing method is a process in which the communication device feeds back the CSI and the decoding result of the first data, so that a communication device that receives the first information can adjust a data transmission process on a channel based on the feedback result. When the communication device is the terminal device, the first information may be uplink information. When the communication device is the network device, the first information may be downlink information.

It should be understood that, in the foregoing solution, the CSI and the decoding result of the first data are fed back by using the second time-frequency resource. The second time-frequency resource and the first time-frequency resource may be separated by one or more time domain units, for example, a symbol or a slot. In embodiments of this application, a time interval between the first time-frequency resource and the second time-frequency resource may be further shortened to reduce a total delay of an operation process of the communication device.

With reference to the first aspect, in some implementations of the first aspect, the determining the second time-frequency resource includes: receiving second indication information, where the second indication information indicates a time domain position and/or a frequency domain position for sending the first information on the second time-frequency resource; and determining the second time-frequency resource based on the second indication information.

With reference to the first aspect, in some implementations of the first aspect, the second indication information is included in DCI, or the second indication information includes identification information of a hybrid automatic repeat request acknowledgment HARQ-ACK.

For example, the DCI may indicate, by using a value of K0+offset+K1, a time domain position for the communication device to feed back the CSI and the decoding result of the first data on the first time-frequency resource, where K0 is a slot offset between receiving the DCI and receiving the first data by the communication device, and K1 is a slot offset between receiving the first data and scheduling a channel resource for data feedback by a first communication device. When a value of offset is 0, the time domain position for the communication device to feed back the CSI and the decoding result of the first data is a time domain position for scheduling the channel resource. When a value of offset is greater than 0, the time domain position for feeding back the CSI and the decoding result of the first data is after a time domain position for scheduling the channel resource.

With reference to the first aspect, in some implementations of the first aspect, the first time-frequency resource is further used to carry a second reference signal, and the second reference signal is used to demodulate a channel over which the first data is received.

In embodiments of this application, the second reference signal may be a demodulation reference signal DMRS, or may be another reference signal that may be used to estimate channel information to demodulate a channel. This is not limited in this specification.

With reference to the first aspect, in some implementations of the first aspect, a time domain position of the second reference signal on the first time-frequency resource is different from the time domain position of the first reference signal on the first time-frequency resource; or a time domain position of the second reference signal on the first time-frequency resource is the same as the time domain position of the first reference signal on the first time-frequency resource, and the frequency domain position of the first reference signal on the first time-frequency resource and a frequency domain position of the second reference signal on the first time-frequency resource have a frequency division multiplexing FDM form or a code division multiplexing CDM form.

It should be noted that, preferably, the time domain positions of the first reference signal and the second reference signal on the first time-frequency resource may be before the time domain position of the first data on the first time-frequency resource.

With reference to the first aspect, in some implementations of the first aspect, the method further includes: obtaining a first correspondence between a plurality of first ports and a plurality of second ports, where the first ports are used to determine the CSI, the second ports are used to demodulate the channel over which the first data is received, and each first port and a corresponding second port have a same frequency domain position but different time domain positions; and determining measurement results of (K1+K2) first ports based on K1 first ports in the plurality of first ports, K2 second ports in the plurality of second ports, and the first correspondence, where the K2 second ports correspond to K2 first ports, and K1 and K2 are integers.

In embodiments of this application, the first reference signal may be a CSI-RS, the first port may be a port used to measure the CSI-RS to determine the CSI, the second reference signal may be a DMRS, and the second port may be used to estimate channel information to implement channel demodulation.

For example, a first port port 1000 and a second port port 3000 have a same frequency domain position and close time domain positions, and a first port port 1001 and a second port port 3001 have a same frequency domain position and close time domain positions. Therefore, it may be determined that channel information measurement results of the port 1000 and the port 3000 are similar, and channel information measurement results of the port 1001 and the port 3001 are similar. Finally, a correspondence that the port 1000 corresponds to the port 3000 and the port 1001 corresponds to the port 3001 is determined. When the communication device needs channel information measurement results of four ports: second ports ports 3000 to 3003, the communication device may obtain the channel information measurement results of the four ports: the ports 3000 to 3003 by measuring four ports: the port 1000, the port 1001, the port 3002, and the port 3003.

In other words, each first port and the corresponding second port have the same frequency domain position and the different time domain positions, and the time domain positions of the two ports may be extremely close or have no time interval. The communication device may determine measurement results of (K1+K2) first ports based on the K1 first ports, the K2 second ports, and the correspondence, where the K2 second ports correspond to the K2 first ports, and K1 and K2 are integers. For example, K1 or K2 may be 0. To be specific, in embodiments of this application, the plurality of second ports may be directly measured, and channel information measurement results of the plurality of second ports are used as channel information measurement results of the plurality of corresponding first ports, where the channel information measurement results are used to determine the CSI. Alternatively, in embodiments of this application, the plurality of first ports may be directly measured, and channel information measurement results of the plurality of first ports are used as channel information measurement results of the plurality of corresponding second ports, where the channel information measurement results are used to demodulate the channel for transmission of the first data.

With reference to the first aspect, in some implementations of the first aspect, the method further includes: determining a power offset between the first port and the second port based on frequency domain density of the first reference signal and frequency domain density of the second reference signal, where the first port is used to determine the CSI, and the second port is used to demodulate the channel over which the first data is received.

With reference to the first aspect, in some implementations of the first aspect, the method further includes: adjusting a quantity of first ports based on the decoding result of the first data, where the first port is used to determine the CSI.

It should be understood that the communication device may measure the first reference signal by using the first port, to obtain channel information, so as to determine the CSI, and may estimate the channel information by using the second port, to demodulate the channel for transmission of the first data. The quantity of first ports and a quantity of second ports affect a delay of obtaining the channel information by the first communication device.

In embodiments of this application, the communication device may adjust, based on the obtained decoding result of the first data, the quantity of first ports or second ports used to measure a channel. An adjusted quantity of first ports or second ports are used in a next operation process of the communication device. To be specific, when re-performing synchronization, channel measurement, measurement feedback, and the like in an active state, the communication device uses the adjusted quantity of first ports or second ports to measure the channel.

For example, ACK=0 indicates that the decoding result of the first data is correct. In this case, the communication device may progressively increase the quantity of first ports or second ports, for example, increase the quantity from one port to two ports, and then increase the quantity from two ports to four ports. Progressively increasing the quantity of measurement ports can reduce a processing delay and resource configuration overheads, and also reduce feedback overheads. In embodiments of this application, the quantity of first ports or second ports may alternatively be increased to eight ports or more, but correspondingly, a channel measurement delay gradually increases. Similarly, ACK=1 indicates that the decoding result of the first data is incorrect. In this case, the communication device may progressively reduce the quantity of first ports or second ports, for example, reduce the quantity from two ports to one port.

With reference to the first aspect, in some implementations of the first aspect, the adjusting the quantity of first ports includes: obtaining third indication information, where the third indication information indicates a plurality of third time-frequency resources in the first time-frequency resource, and different quantities of first ports are used in the plurality of third time-frequency resources; and adjusting a time-frequency position from a fourth time-frequency resource to a fifth time-frequency resource for receiving the first reference signal, where the plurality of third time-frequency resources include the fourth time-frequency resource and the fifth time-frequency resource.

For example, DCI received by the communication device indicates that in a symbol *x*1, the communication device measures channel information by using one port; in a symbol *x*2, the communication device measures channel information by using two ports; and in a symbol *x*3, the communication device measures channel information by using four ports. Further, when ACK=0, the communication device may adjust a measurement resource or a time-frequency resource of the first reference signal from the symbol *x*1 to the symbol *x*2, in other words, switch from the symbol *x*1 to the symbol *x*2, so that a quantity of first ports used in a next operation process of the communication device is adjusted from one port to two ports. Similarly, the communication device adjusts a measurement resource or a time-frequency resource of the first reference signal from the symbol *x*3 to the symbol *x*2, so that a quantity of first ports used in a next operation process of the communication device is adjusted from four ports to two ports.

It should be noted that the foregoing manner of indicating a plurality of measurement resources or a plurality of time-frequency resources by using the DCI is merely an example. The manner of indicating the plurality of measurement resources or the plurality of time-frequency resources is not limited in this application. For example, the plurality of measurement resources or the plurality of time-frequency resources may alternatively be indicated according to a predefined rule.

With reference to the first aspect, in some implementations of the first aspect, the method further includes: performing beam sweeping on a plurality of sixth time-frequency resources, to obtain a plurality of beam sweeping feedback results, where the plurality of sixth time-frequency resources are used to respectively carry a plurality of first reference signals, and the plurality of sixth time-frequency resources have different time domain positions on the first time-frequency resource.

It should be understood that, in embodiments of this application, beam sweeping may be performed on a measurement resource or a time-frequency resource of the first reference signal like a CSI-RS by using a narrow beam, and beam sweeping may be performed on a time-frequency resource of the first data by using a wide beam, to ensure data transmission quality.

Optionally, the plurality of sixth time-frequency resources may all be included in one symbol, but are distributed in a plurality of different symbols. In this way, it can be ensured that time domain positions of different time domain resources do not overlap, and feedback overheads are low. For example, start slots of the plurality of sixth time domain resources are the same, and DCI received by the communication device separately indicates a plurality of different offset values, so that time domain positions of the plurality of sixth time domain resources do not overlap.

With reference to the first aspect, in some implementations of the first aspect, a quantity of first ports used to measure each of the plurality of first reference signals is 1.

It should be understood that a reason is that a beam sweeping result is not accurate enough, and port resources are wasted if excessive first ports are used.

With reference to the first aspect, in some implementations of the first aspect, the method further includes: sending at least two pieces of first information, where each piece of first uplink information in the at least two pieces of first information includes at least one of the plurality of beam sweeping feedback results.

It should be understood that after obtaining the plurality of beam sweeping results, the communication device needs to report or feed back the beam sweeping results by using uplink information or downlink information. A process thereof is similar to the foregoing process of feeding back the CSI and the decoding result of the first data. However, the communication device further needs to feed back both the CSI and the decoding result of the first data by using one piece of uplink information or one piece of downlink information. Therefore, in this case, channel resources are limited, beam sweeping result reporting may fail to be completed at a time, and one or more pieces of additional uplink information or downlink information need to be used to feed back the beam sweeping results.

With reference to the first aspect, in some implementations of the first aspect, before the determining the first time-frequency resource, the method further includes: receiving a first wake-up signal, where the first wake-up signal is used to activate the terminal device or the network device.

In embodiments of this application, the first wake-up signal may be an LP-WUS signal, so that after receiving the first wake-up signal, the communication device wakes up from a sleep state to an active state.

According to a second aspect, a communication method is provided. The method may be applied to a terminal device or a network device, or a component of the terminal device or the network device. For brevity, an example in which the method is performed by the terminal device or the network device is used for description herein.

The method includes: determining a first time-frequency resource, where the first time-frequency resource is used to carry a first reference signal and first data, and the first reference signal is used to determine channel state information CSI; and on the first time-frequency resource, sending the first reference signal, and sending the first data.

With reference to the second aspect, in some implementations of the second aspect, the first time-frequency resource is included in one transmission time interval TTI, or included in one slot, or included in one symbol.

With reference to the second aspect, in some implementations of the second aspect, a time domain position of the first reference signal on the first time-frequency resource precedes a time domain position of the first data on the first time-frequency resource.

With reference to the second aspect, in some implementations of the second aspect, the method further includes: sending first indication information, where the first indication information indicates the time domain position and/or a frequency domain position for sending the first data on the first time-frequency resource and the time domain position and/or a frequency domain position for sending the first reference signal on the first time-frequency resource.

With reference to the second aspect, in some implementations of the second aspect, the first indication information is included in downlink control information DCI or radio resource control RRC signaling.

With reference to the second aspect, in some implementations of the second aspect, the first time-frequency resource is further used to carry first information, and the first information includes the CSI and a decoding result of the first data.

With reference to the second aspect, in some implementations of the second aspect, the method further includes: sending second indication information, where the second indication information indicates a time domain position and/or a frequency domain position for receiving the first information on a second time-frequency resource, and the first information includes the CSI and the decoding result of the first data.

With reference to the second aspect, in some implementations of the second aspect, the first time-frequency resource is further used to carry a second reference signal, and the second reference signal is used to demodulate a channel over which the first data is sent.

With reference to the second aspect, in some implementations of the second aspect, a time domain position of the second reference signal on the first time-frequency resource is different from the time domain position of the first reference signal on the first time-frequency resource; or a time domain position of the second reference signal on the first time-frequency resource is the same as the time domain position of the first reference signal on the first time-frequency resource, and the frequency domain position of the first reference signal on the first time-frequency resource and a frequency domain position of the second reference signal on the first time-frequency resource have a frequency division multiplexing FDM form or a code division multiplexing CDM form.

With reference to the second aspect, in some implementations of the second aspect, before the determining the first time-frequency resource, the method further includes: sending a first wake-up signal, where the first wake-up signal is used to activate the network device or the terminal device.

For specific solution descriptions and beneficial effects of the communication method shown in the second aspect, refer to the first aspect. Details are not described herein.

According to a third aspect, a communication apparatus is provided. The apparatus includes: a processing unit, configured to determine a first time-frequency resource, where the first time-frequency resource is used to carry a first reference signal and first data, and the first reference signal is used to determine channel state information CSI; and a transceiver unit, configured to: on the first time-frequency resource, receive the first reference signal to determine the CSI, and receive the first data.

With reference to the third aspect, in some implementations of the third aspect, the first time-frequency resource is included in one transmission time interval TTI, or included in one slot, or included in one symbol.

With reference to the third aspect, in some implementations of the third aspect, a time domain position of the first reference signal on the first time-frequency resource precedes a time domain position of the first data on the first time-frequency resource.

With reference to the third aspect, in some implementations of the third aspect, the transceiver unit is further configured to receive first indication information, where the first indication information indicates the time domain position and/or a frequency domain position for receiving the first data on the first time-frequency resource and the time domain position and/or a frequency domain position for receiving the first reference signal on the first time-frequency resource; and the processing unit is specifically configured to determine the first time-frequency resource based on the first indication information.

With reference to the third aspect, in some implementations of the third aspect, the first indication information is included in downlink control information DCI or radio resource control RRC signaling.

With reference to the third aspect, in some implementations of the third aspect, the first time-frequency resource is further used to carry first information, and the first information includes the CSI and a decoding result of the first data.

With reference to the third aspect, in some implementations of the third aspect, the processing unit is further configured to determine a second time-frequency resource, where the second time-frequency resource is used to carry first information, and the first information includes the CSI and a decoding result of the first data.

With reference to the third aspect, in some implementations of the third aspect, the transceiver unit is further configured to receive second indication information, where the second indication information indicates a time domain position and/or a frequency domain position for sending the first information on the second time-frequency resource; and the processing unit is specifically configured to determine the second time-frequency resource based on the second indication information.

With reference to the third aspect, in some implementations of the third aspect, the second indication information is included in DCI, or the second indication information includes identification information of a hybrid automatic repeat request acknowledgment HARQ-ACK.

With reference to the third aspect, in some implementations of the third aspect, the first time-frequency resource is further used to carry a second reference signal, and the second reference signal is used to demodulate a channel over which the first data is received.

With reference to the third aspect, in some implementations of the third aspect, a time domain position of the second reference signal on the first time-frequency resource is different from the time domain position of the first reference signal on the first time-frequency resource; or a time domain position of the second reference signal on the first time-frequency resource is the same as the time domain position of the first reference signal on the first time-frequency resource, and the frequency domain position of the first reference signal on the first time-frequency resource and a frequency domain position of the second reference signal on the first time-frequency resource have a frequency division multiplexing FDM form or a code division multiplexing CDM form.

With reference to the third aspect, in some implementations of the third aspect, the transceiver unit is further configured to obtain a first correspondence between a plurality of first ports and a plurality of second ports, where the first ports are used to determine the CSI, the second ports are used to demodulate the channel over which the first data is received, and each first port and a corresponding second port have a same frequency domain position but different time domain positions; and the processing unit is further configured to determine measurement results of (K1+K2) first ports based on K1 first ports in the plurality of first ports, K2 second ports in the plurality of second ports, and the first correspondence, where the K2 second ports correspond to K2 first ports, and K1 and K2 are integers.

With reference to the third aspect, in some implementations of the third aspect, the processing unit is further configured to determine a power offset between the first port and the second port based on frequency domain density of the first reference signal and frequency domain density of the second reference signal, where the first port is used to determine the CSI, and the second port is used to demodulate the channel over which the first data is received.

With reference to the third aspect, in some implementations of the third aspect, the processing unit is further configured to adjust a quantity of first ports based on the decoding result of the first data, where the first port is used to determine the CSI.

With reference to the third aspect, in some implementations of the third aspect, the transceiver unit is further configured to obtain third indication information, where the third indication information indicates a plurality of third time-frequency resources in the first time-frequency resource, and different quantities of first ports are used in the plurality of third time-frequency resources; and the processing unit is specifically configured to adjust a time-frequency position from a fourth time-frequency resource to a fifth time-frequency resource for receiving the first reference signal, where the plurality of third time-frequency resources include the fourth time-frequency resource and the fifth time-frequency resource.

With reference to the third aspect, in some implementations of the third aspect, the processing unit is further configured to perform beam sweeping on a plurality of sixth time-frequency resources, to obtain a plurality of beam sweeping feedback results, where the plurality of sixth time-frequency resources are used to respectively carry a plurality of first reference signals, and the plurality of sixth time-frequency resources have different time domain positions on the first time-frequency resource.

With reference to the third aspect, in some implementations of the third aspect, a quantity of first ports used to measure each of the plurality of first reference signals is 1.

With reference to the third aspect, in some implementations of the third aspect, the transceiver unit is further configured to send at least two pieces of first information, where each piece of first uplink information in the at least two pieces of first information includes at least one of the plurality of beam sweeping feedback results.

With reference to the third aspect, in some implementations of the third aspect, before determining the first time-frequency resource, the transceiver unit is further configured to receive a first wake-up signal, where the first wake-up signal is used to activate a terminal device or a network device.

For explanations and beneficial effects of related content of the communication apparatus provided in the third aspect, refer to the communication method shown in the first aspect. Details are not described herein again.

According to a fourth aspect, a communication apparatus is provided. The apparatus includes: a processing unit, configured to determine a first time-frequency resource, where the first time-frequency resource is used to carry a first reference signal and first data, and the first reference signal is used to determine channel state information CSI; and a transceiver unit, configured to: on the first time-frequency resource, send the first reference signal, and send the first data.

With reference to the fourth aspect, in some implementations of the fourth aspect, the first time-frequency resource is included in one transmission time interval TTI, or included in one slot, or included in one symbol.

With reference to the fourth aspect, in some implementations of the fourth aspect, a time domain position of the first reference signal on the first time-frequency resource precedes a time domain position of the first data on the first time-frequency resource.

With reference to the fourth aspect, in some implementations of the fourth aspect, the transceiver unit is further configured to send first indication information, where the first indication information indicates the time domain position and/or a frequency domain position for sending the first data on the first time-frequency resource and the time domain position and/or a frequency domain position for sending the first reference signal on the first time-frequency resource.

With reference to the fourth aspect, in some implementations of the fourth aspect, the first indication information is included in downlink control information DCI or radio resource control RRC signaling.

With reference to the fourth aspect, in some implementations of the fourth aspect, the first time-frequency resource is further used to carry first information, and the first information includes the CSI and a decoding result of the first data.

With reference to the fourth aspect, in some implementations of the fourth aspect, the transceiver unit is further configured to send second indication information, where the second indication information indicates a time domain position and/or a frequency domain position for sending the first information on a second time-frequency resource, and the first information includes the CSI and the decoding result of the first data.

With reference to the fourth aspect, in some implementations of the fourth aspect, the first time-frequency resource is further used to carry a second reference signal, and the second reference signal is used to demodulate a channel over which the first data is sent.

With reference to the fourth aspect, in some implementations of the fourth aspect, a time domain position of the second reference signal on the first time-frequency resource is different from the time domain position of the first reference signal on the first time-frequency resource; or a time domain position of the second reference signal on the first time-frequency resource is the same as the time domain position of the first reference signal on the first time-frequency resource, and the frequency domain position of the first reference signal on the first time-frequency resource and a frequency domain position of the second reference signal on the first time-frequency resource have a frequency division multiplexing FDM form or a code division multiplexing CDM form.

With reference to the fourth aspect, in some implementations of the fourth aspect, before determining the first time-frequency resource, the transceiver unit is further configured to send a first wake-up signal, where the first wake-up signal is used to activate a network device or a terminal device.

For explanations and beneficial effects of related content of the communication apparatus provided in the fourth aspect, refer to the communication method shown in the second aspect. Details are not described herein again.

According to a fifth aspect, a communication apparatus is provided, including a processor. The processor is configured to execute a computer program or instructions or use a logic circuit, to cause the communication apparatus to perform the method according to any one of the first aspect and the possible implementations of the first aspect.

In a possible implementation, the communication apparatus further includes a memory, configured to store the computer program or the instructions.

In a possible implementation, the communication apparatus further includes a communication interface, configured to input and/or output a signal.

According to a sixth aspect, a communication apparatus is provided, including a processor. The processor is configured to execute a computer program or instructions or use a logic circuit, to cause the communication apparatus to perform the method according to any one of the second aspect and the possible implementations of the second aspect.

In a possible implementation, the communication apparatus further includes a memory, configured to store the computer program or the instructions.

In a possible implementation, the communication apparatus further includes a communication interface, configured to input and/or output a signal.

According to a seventh aspect, a communication apparatus is provided, including a logic circuit and an input/output interface. The input/output interface is configured to input and/or output a signal. The logic circuit is configured to perform the method according to any one of the first aspect and the possible implementations of the first aspect. Alternatively, the logic circuit is configured to perform the method according to any one of the second aspect and the possible implementations of the second aspect.

According to an eighth aspect, a computer-readable storage medium is provided. The computer-readable storage medium stores a computer program or instructions. When the computer program or the instructions are executed by a computer, the method according to any one of the first aspect and the possible implementations of the first aspect is performed, or the method according to any one of the second aspect and the possible implementations of the second aspect is performed.

According to a ninth aspect, a computer program product is provided, including instructions. When the instructions are executed by a computer, the method according to any one of the first aspect and the possible implementations of the first aspect is performed, or the method according to any one of the second aspect and the possible implementations of the second aspect is performed.

According to a tenth aspect, a communication system is provided. The communication system includes the communication apparatuses according to the third aspect and the fourth aspect, or includes the communication apparatuses according to the fifth aspect and the sixth aspect.

For descriptions of beneficial effects of the third aspect to the tenth aspect, refer to the descriptions in the first aspect and the second aspect.

### BRIEF DESCRIPTION OF DRAWINGS

FIG. 1 is a diagram of an architecture of a communication system according to an embodiment of this application;
FIG. 2 is a diagram of an architecture of another communication system according to an embodiment of this application;
FIG. 3a and FIG. 3b are diagrams of operation processes of a communication device in an active state according to an embodiment of this application;
FIG. 4a and FIG. 4b are diagrams of a time domain resource for a communication device to feed back CSI and a decoding result according to an embodiment of this application;
FIG. 5a to FIG. 5d are diagrams of a first time-frequency resource according to an embodiment of this application;
FIG. 6 is a schematic interaction flowchart of a communication method according to an embodiment of this application;
FIG. 7 is a schematic interaction flowchart of another communication method according to an embodiment of this application;
FIG. 8a to FIG. 8d are diagrams of another first time-frequency resource according to an embodiment of this application;
FIG. 9 is a diagram of a correspondence between a first port and a second port according to an embodiment of this application;
FIG. 10a to FIG. 10c are diagrams of adjusting a quantity of ports according to an embodiment of this application;
FIG. 11 is a diagram of beam sweeping according to an embodiment of this application;
FIG. 12 is a block diagram of a communication apparatus according to an embodiment of this application;
FIG. 13 is a block diagram of another communication apparatus according to an embodiment of this application; and
FIG. 14 is a block diagram of another communication apparatus according to an embodiment of this application.

### DESCRIPTION OF EMBODIMENTS

The following describes technical solutions in this application with reference to the accompanying drawings.

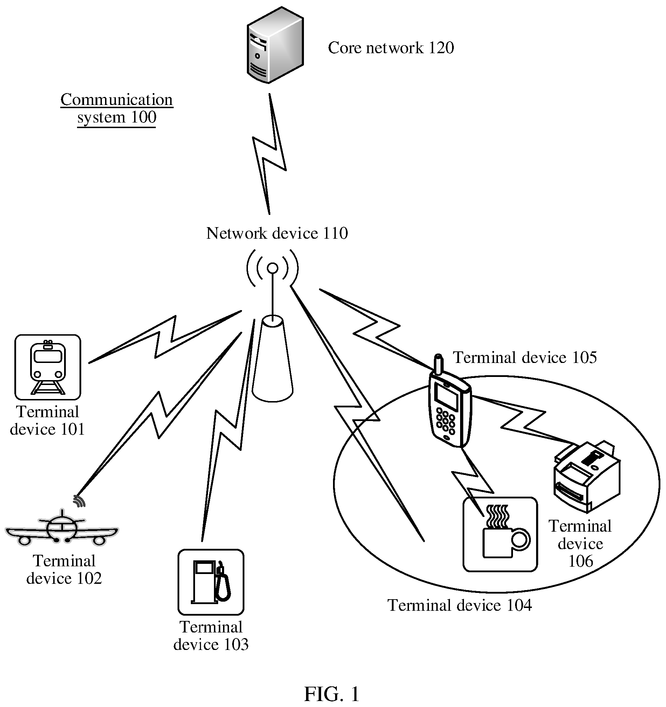

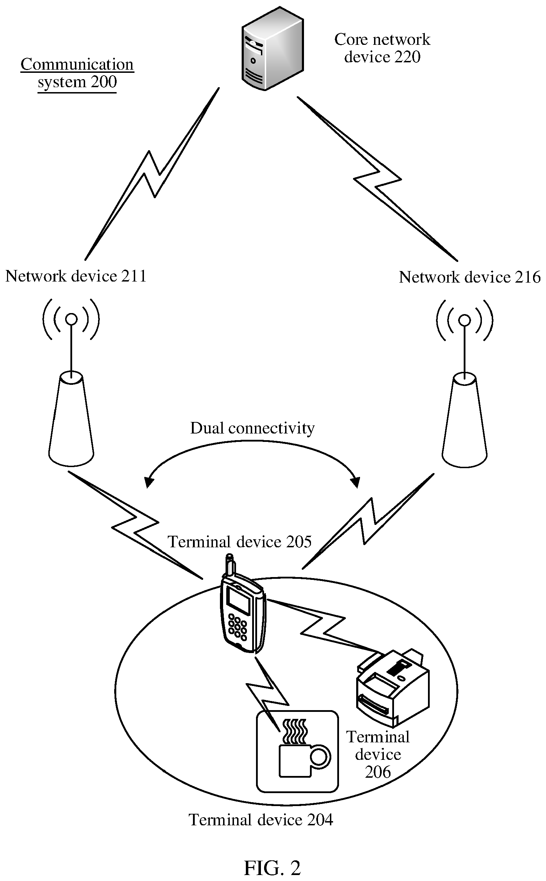

Communication systems and network architectures to which embodiments of this application are applicable are first described with reference to FIG. 1 and FIG. 2.

The technical solutions provided in this application may be applied to various communication systems, for example, a 5th generation (5th generation, 5G) system or a new radio (new radio, NR) system, a long term evolution (long term evolution, LTE) system, an LTE frequency division duplex (frequency division duplex, FDD) system, an LTE time division duplex (time division duplex, TDD) system, and a universal mobile telecommunications system (universal mobile telecommunications system, UMTS). The technical solutions provided in this application may be further applied to a future communication system, for example, a 6th generation (6th generation, 6G) mobile communication system. The technical solutions provided in this application may be further applied to device-to-device (device-to-device, D2D) communication, vehicle-to-everything (vehicle-to-everything, V2X) communication, machine-to-machine (machine-to-machine, M2M) communication, machine type communication (machine type communication, MTC), an internet of things (internet of things, IoT) communication system, a non-terrestrial network (non-terrestrial network, NTN) communication system, or another communication system.

This application may alternatively be applied to another communication system, provided that an entity in the communication system needs to send downlink data and pilot information, and another entity needs to receive indication information, and can feed back information and transmit data. In other words, there are downlink and uplink communication links in the communication system.

It should be understood that a specific structure of an execution body of a provided method is not particularly limited in embodiments of this application, provided that a program that records code of the method provided in embodiments of this application can be run to perform communication according to the method provided in embodiments of this application. For example, the execution body of the method provided in embodiments of this application may be a terminal device, a network device, or a functional module that can invoke and execute the program in the terminal device or the network device.

In an example, FIG. 1 and FIG. 2 are diagrams of architectures of network architectures according to embodiments of this application. For example, the architectures may include a terminal device, a network device, and a core network.

The terminal device in embodiments of this application may also be referred to as a terminal, and may be a device having a wireless transceiver function. The terminal device may be deployed on land, including indoors, outdoors, handheld, or vehicle-mounted, may be deployed on water (for example, on a ship), or may be deployed in the air (for example, on an airplane, a balloon, or a satellite). The terminal device may be user equipment (user equipment, UE). The UE includes a handheld device, a vehicle-mounted device, a wearable device, or a compute device having a wireless communication function. For example, the UE may be a mobile phone (mobile phone), a tablet computer, a computer having a wireless transceiver function, or the like. In addition, the terminal device may alternatively be an apparatus, for example, a chip or a chip system, that can support the terminal in implementing the function. The apparatus may be installed in the terminal. In the technical solutions provided in embodiments of this application, an example in which the apparatus configured to implement the function of the terminal is a terminal is used to describe the technical solutions provided in embodiments of this application. It should be understood that the terminal is a general term, and includes a most common mobile phone, CPE, and a backhaul (integrated access and backhaul, IAB) terminal. The terminal device may alternatively be a virtual reality (virtual reality, VR) terminal device, an augmented reality (augmented reality, AR) terminal device, a wireless terminal in industrial control, a wireless terminal in self-driving, a wireless terminal in telemedicine, a wireless terminal in a smart grid, a wireless terminal in a smart city (smart city), a wireless terminal in a smart home (smart home), or the like.

In embodiments of this application, an apparatus configured to implement a function of the terminal device may be a terminal device, or may be an apparatus, for example, a chip system or a chip, that can support the terminal device in implementing the function. The apparatus may be installed in the terminal device. In embodiments of this application, the chip system may include a chip, or may include a chip and another discrete device.

The network device in embodiments of this application includes a base station (base station, BS), and may be a device that is deployed in a radio access network and that can perform wireless communication with the terminal. The base station may be in a plurality of forms, for example, a macro base station, a micro base station, a relay station, an access point, a backhaul station, and the like. For example, the base station in embodiments of this application may be a base station in 5G or a base station in LTE. The base station in 5G may also be referred to as a transmission reception point (transmission reception point, TRP) or a next generation NodeB (next generation NodeB, gNB). In embodiments of this application, an apparatus configured to implement a function of the network device may be a network device, or may be an apparatus, for example, a chip or a chip system, that can support the network device in implementing the function. The apparatus may be installed in the network device. In embodiments of this application, the chip system may include a chip, or may include a chip and another discrete device. In the technical solutions provided in embodiments of this application, an example in which the apparatus configured to implement the function of the network device is a network device, and the network device is a base station is used to describe the technical solutions provided in embodiments of this application.

FIG. 1 is a diagram of an example architecture of a communication system 100 according to an embodiment of this application. The method in embodiments of this application may be applied to the communication system 100 shown in FIG. 1. It should be understood that the communication system 100 to which the method in embodiments of this application may be applied may include more or fewer network devices, terminal devices, or core network devices. The network device, the terminal device, or the core network in FIG. 1 may be hardware, or may be software obtained through functional division, or may be a combination thereof. In FIG. 1, the network device and the terminal device, and the network device and the core network may communicate with each other via another device or network element.

In the communication system 100 shown in FIG. 1, a core network 120, a network device 110, and a terminal device 101 to a terminal device 106 form the communication system 100 in a standalone (standalone, SA) scenario. In the communication system 100, the network device 110 may send downlink data to the terminal device 101 to the terminal device 106. Certainly, the terminal device 101 to the terminal device 106 may send uplink data to the network device 110. A connection and data transmission may be implemented between the network device 110 and the core network 120 via a transport network.

In the SA scenario, in the communication system 100, a terminal device is connected to a single network device, and the network device connected to the terminal device and a core network connected to the network device are of a same standard. For example, the core network is a 5G core network, the network device is correspondingly a 5G base station, and the 5G base station is directly connected to the 5G core network; or the core network is a 6G core network, the network device is correspondingly a 6G base station, and the 6G base station is directly connected to the 6G core network.

It should be understood that the terminal device 101 to the terminal device 106 may be, for example, cellular phones, smartphones, portable computers, handheld communication devices, handheld compute devices, satellite radio apparatuses, global positioning systems, uncrewed aerial vehicle terminals, and/or any other appropriate devices used for communication in the wireless communication system 100. In addition, the terminal device 104 to the terminal device 106 may also form a communication system. In the communication system, the terminal device 105 may send downlink data to the terminal device 104 or the terminal device 106.

FIG. 2 is a diagram of an example architecture of a communication system 200 according to another embodiment of this application. The method in embodiments of this application may be applied to the communication system 200 shown in FIG. 2. It should be understood that the communication system 200 to which the method in embodiments of this application may be applied may include more or fewer network devices, terminal devices, or core network devices. The network device, the terminal device, or the core network in FIG. 2 may be hardware, or may be software obtained through functional division, or may be a combination thereof. In FIG. 2, the network device and the terminal device, and the network device and the core network may communicate with each other via another device or network element.

In the communication system 200 shown in FIG. 2, a core network 220, a network device 210, and a terminal device 204 to a terminal device 106 form the communication system 200 in a dual connectivity (dual connectivity, DC) scenario. In the communication system 200, the network device 210 may send downlink data to the terminal device 204 to the terminal device 206. Certainly, the terminal device 204 to the terminal device 206 may send uplink data to the network device 210. A connection and data transmission may be implemented between the network device 210 and the core network 220 via a transport network.

In the DC scenario, a terminal device is connected to network devices of different standards or a same standard, and this is applicable to UE in a connected state. For example, when the core network is a 5G core network, the terminal device may be connected to a network device 211 (for example, a 5G base station) and a network device 216 (for example, a 6G base station), where the 5G base station serves as a main station, and the 6G base station serves as a secondary station. For another example, when the core network is a 6G core network, the terminal device may be connected to a network device 211 (for example, a 5G base station) and a network device 216 (for example, a 6G base station), where the 6G base station serves as a main station, and the 5G base station serves as a secondary station. For another example, when the core network is a 6G core network, the terminal device may be connected to two 6G base stations, that is, both a main station and a secondary station are 6G base stations.

It should be understood that the terminal device 204 to the terminal device 206 may be, for example, cellular phones, smartphones, portable computers, handheld communication devices, handheld compute devices, satellite radio apparatuses, global positioning systems, uncrewed aerial vehicle terminals, and/or any other appropriate devices used for communication in the wireless communication system 100. In addition, the terminal device 204 to the terminal device 206 may also form a communication system. In the communication system, the terminal device 205 may send downlink data to the terminal device 204 or the terminal device 206.

It should be understood that the network architectures shown above are merely examples for description. A communication system applicable to embodiments of this application is not limited thereto, and any communication that can implement functions of the foregoing network elements is applicable to embodiments of this application. For example, the network architectures shown in FIG. 1 and FIG. 2 may include more terminal devices and network devices of more types. For another example, the communication system in embodiments of this application may alternatively be a non-terrestrial network (non-terrestrial network, NTN) communication system, for example, a satellite communication network, a high altitude platform station (high altitude platform station, HAPS) system, or an air-to-ground network. For example, a satellite communication system may include a satellite, and a terminal device on the satellite communicates with a terrestrial base station. The satellite may be a non-terrestrial base station, a non-terrestrial device, or the like, for example, an uncrewed aerial vehicle, a hot air balloon, a low-earth orbit satellite, a medium-earth orbit satellite, or a high-earth orbit satellite. The NTN communication system may be independently deployed, or may be used as a supplement to a terrestrial network.

It should be further understood that the foregoing names are defined merely for ease of distinguishing between different functions, and should not constitute any limitation on this application. This application does not exclude a possibility of using other names in a 6G network and another future network.

The following describes an existing operation process of a communication device after wake-up and an existing technical problem.

With development of communication technologies, communication networks have higher requirements on capabilities of communication devices such as terminal devices or network devices. For example, network capability improvement has higher requirements on rates of the communication devices; diversified applications need a plurality of forms of communication devices, for example, terminal device forms relating to smartphones, VR/AR, uncrewed aerial vehicles, autonomous driving, wearable devices, and the like; and the communication devices need to support more frequency bands, higher bandwidth, and the like. As the requirements on the capabilities of the communication devices become higher, hardware of the communication devices increases accordingly, and power consumption of the communication devices inevitably increases. For example, in typical services (such as comprehensive web browsing, instant messaging, games, and videos), average increases in power consumption for communication of the terminal devices reach more than 200%. Long battery lives of the terminals are an important aspect of user experience, and affect use of services of the terminal devices. Therefore, long battery lives of the communication devices face a great challenge, and how to reduce the power consumption of the communication devices is a key to resolving the problem.

In the release 18 (release 18) for a 5th generation (5th generation, 5G) mobile communication system, research on low-power wake-up signals (low-power wake-up signals, LP-WUSs) has been carried out, to evaluate potential of communication devices equipped with low-power wake-up radio (low-power wake-up radio, LP-WUR) to reduce power consumption. Usually, even if the communication device does not send or receive any data, power consumption of dozens of milliwatts exists. A reason for such idle-state power consumption is that the communication device needs to periodically measure and detect a potential paging message. If the communication device detects an LP-WUS signal, the communication device continues to decode the paging message, and wakes up from a sleep state to an active state to work. If the communication device detects no LP-WUS signal, the communication device returns to the sleep state, and waits for the next time for receiving an LP-WUS signal. The LP-WUS signal is extremely similar to a wake-up signal (wake-up signal, WUS). The WUS is delivered based on a conventional Zadoff-Chu sequence and downlink control information (downlink control information, DCI) in a format: Format 2-6 on a physical data control channel (PDCCH).

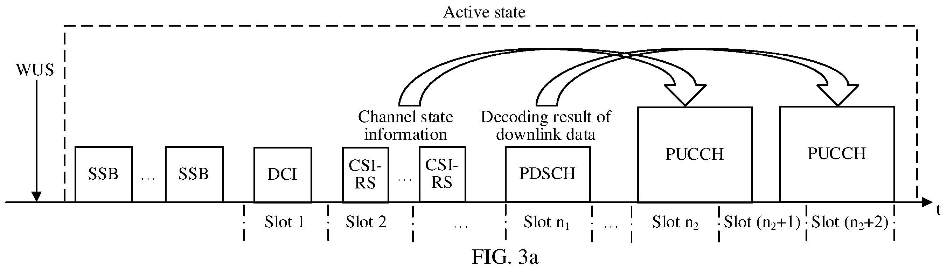

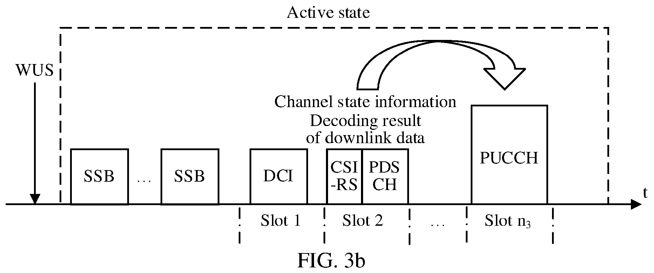

FIG. 3a and FIG. 3b are schematic flowcharts in which a communication device wakes up from a sleep state to an active state to work on a time-frequency resource. FIG. 3a shows a current process in which a communication device wakes up from a sleep state to an active state to work.

First, the communication device receives a WUS signal, and then wakes up from the sleep state to the active state. The WUS signal may be the LP-WUS signal described above. Subsequently, when working in the active state, the communication device sends one or more SSBs to perform time-frequency domain synchronization. Then, the communication device (for example, a terminal device) receives DCI from another communication device (for example, a network device). Finally, the communication device receives a channel state information-reference signal (channel state information-reference signal, CSI-RS) and data on a channel, and feeds back channel state information (channel state information, CSI) and a data decoding result.

It should be understood that the CSI may include a CSI resource index (index), a rank indicator (rank indicator, RI), a channel quality indicator (channel quality indicator, CQI), and the like. To reduce a quantity of bits for feedback, the network device may select one or more optimal CQIs that may be reported in sub-band CQIs. Optionally, the CSI may further include a precoding matrix indicator (precoding matrix indicator, PMI), where the PMI may be used to feed back a precoding matrix present when a pilot signal power offset is 0, and may also reduce bit overheads for feedback.

It should be noted that, the operation process shown in FIG. 3a and FIG. 3b is merely an example. The wake-up signal received in the operation process of the communication device may alternatively be another type of wake-up signal, and the reference signal used to determine the channel state information may alternatively be another reference signal, for example, a demodulation reference signal (demodulation reference signal, DMRS). This application does not exclude a possibility of using other types of signals in a 6G network and another future network. For ease of solution description, in this application, a 5G network shown in FIG. 3a and FIG. 3b is used as an example to describe embodiments.

It should be understood that, in a wireless communication system, data or information may be carried by using a time-frequency resource. The time-frequency resource may include a resource in time domain and a resource in frequency domain. The resource in time domain may include one or more time domain units. One time domain unit may be one symbol, one mini-slot (mini-slot), one slot (slot), one transmission time interval (transmission time interval, TTI), or one subframe (subframe). Duration of one subframe in time domain may be one millisecond (ms). One slot includes 14 symbols. One mini-slot may include at least one symbol (for example, two symbols, seven symbols, 14 symbols, or any quantity of symbols fewer than or equal to 14 symbols). In embodiments of this application, the "data" or the "information" may be understood as a bit generated by encoding an information block, or the "data" or the "information" may be understood as a modulation symbol generated by encoding and modulating an information block.

For example, the operation process shown in FIG. 3a and that the communication device is a terminal device are used as an example to specifically describe an operation process of the terminal device in an active state. As shown in FIG. 3a, the terminal device may perform the foregoing operation process on different time-frequency resources such as a transmission time interval (transmission time interval, TTI), a slot (slot), and a symbol (symbol).

For example, the terminal device may receive, in a slot 1, DCI sent by the network device. The DCI may include indication information indicating a time domain position for the terminal device to receive a CSI-RS and downlink data from the network device, and may include indication information indicating a time domain position for the terminal device to feed back CSI and a data decoding result to the network device by using uplink information.

For another example, the terminal device may receive at least one CSI-RS in a slot 2, a slot 3, and a plurality of possible slots, so that the terminal device can obtain channel state information, for example, a precoding matrix and channel quality information, of a downlink channel between the network device and the terminal device by measuring the CSI-RS. The channel state information may be used for scheduling, link adaptation, and the like of the network device. In addition, the terminal device may feed back, to the network device through a physical uplink control channel (physical uplink control channel, PUCCH) in at least one slot like a slot n2, the channel state information of the downlink channel obtained through measurement. Time domain positions for the terminal device to receive the CSI-RS and feed back the CSI may be indicated by using the foregoing DCI.

For another example, the terminal device may receive downlink data from the network device through a physical downlink shared channel (physical downlink shared channel, PDSCH) in a slot n₁, and may feed back a decoding result of the downlink data to the network device through a PUCCH in at least one other slot. Time domain positions for the terminal device to receive the downlink data and feed back the decoding result may be indicated by using the foregoing DCI.

The operation process shown in FIG. 3a is also applicable to the network device. For example, the terminal device sends a WUS signal to the network device, so that the network device wakes up from a sleep state to an active state. In this case, in FIG. 3a, the PDSCH is replaced with a physical uplink shared channel (physical uplink shared channel, PUSCH), the PUCCH is replaced with a physical downlink control channel (physical downlink control channel, PDCCH), the network device receives DCI from the terminal device, and measured CSI is CSI of an uplink channel. For other operation processes, refer to the foregoing descriptions. Details are not described herein again.

However, when a communication device in a connected state wakes up from a sleep state to an active state to work, due to outdated channel information, the communication device needs to re-measure channel information, or due to movement of a user of the communication device like a terminal device, uplink and downlink beams may not be aligned, or due to synchronization timeout, the communication device needs to resend a synchronization signal block (synchronization signal/PBCH block, SSB) to perform time-frequency domain synchronization, or the like. In this case, the communication device needs to re-perform synchronization, channel measurement, measurement feedback, and the like, that is, all of the operation process in the active state shown in FIG. 3a.

As shown in FIG. 3a, there is a time interval or a delay between receiving the CSI-RS and receiving the downlink data by the terminal device. Similarly, there is a time interval or a delay between receiving the downlink data and feeding back the CSI and the decoding result. Alternatively, there may be a time interval or a delay between receiving one CSI-RS and receiving another CSI-RS by the terminal device. Therefore, these delays cause a long time for the communication device to re-perform all of the operation process in the active state, and a high delay of measuring the CSI-RS, receiving the data, and feeding back the CSI and the decoding result. Finally, in the foregoing scenario, the communication device cannot feed back a channel change in time.

To resolve the foregoing technical problem, this application provides a communication method, to shorten a delay of obtaining channel information by a communication device and use the channel information for data transmission in time. The following describes embodiments of the communication method with reference to FIG. 3a to FIG. 11.

### Embodiment 1

For example, the communication device is a terminal device. FIG. 3b is a diagram of a communication method according to this application. As shown in FIG. 3b, after receiving a WUS signal, the terminal device enters an active state to work. After receiving DCI from a network device in a slot 1, the terminal device receives a CSI-RS and downlink data in a slot 2, and sends CSI and a decoding result of the downlink data to the network device by using same uplink information.

In other words, in the communication method provided in this application, time domain positions for the terminal device to receive the CSI-RS and the downlink data are in a same time domain unit, for example, in a same TTI, or in a same slot or a same symbol shown in FIG. 3b. In addition, preferably, there is no time interval or delay between the time domain positions for receiving the CSI-RS and the downlink data. In addition, the terminal device feeds back the CSI and the decoding result of the downlink data to the network device by using one piece of uplink information. In this way, a delay of an entire operation process in which the communication device obtains the CSI and the downlink data and feeds back the CSI and the decoding result of the downlink data can be shortened, to quickly feed back a channel change.

Optionally, to further shorten the delay of the foregoing operation process, in this embodiment of this application, a numerology configuration of a large frequency-domain subcarrier spacing may be further used. For example, a frequency-domain subcarrier spacing SCS of the CSI-RS is 120 kHz. In this case, a length of each slot is 0.125 ms, thereby further shortening the delay of performing the foregoing operation process by the terminal device.

For example, being in a same slot as shown in FIG. 3b is used as an example. The slot 2 may include 14 symbols. The communication device may receive the CSI-RS in first k symbols, and may start to receive data from another communication device since a j^{th} symbol, where k is a positive integer, and j is a positive integer greater than k. Preferably, in this embodiment of this application, a value of j may be k+1. In this way, there is no time interval or delay between receiving the CSI-RS and receiving the data by the communication device. In other words, the communication device receives the downlink data immediately after receiving the CSI-RS.

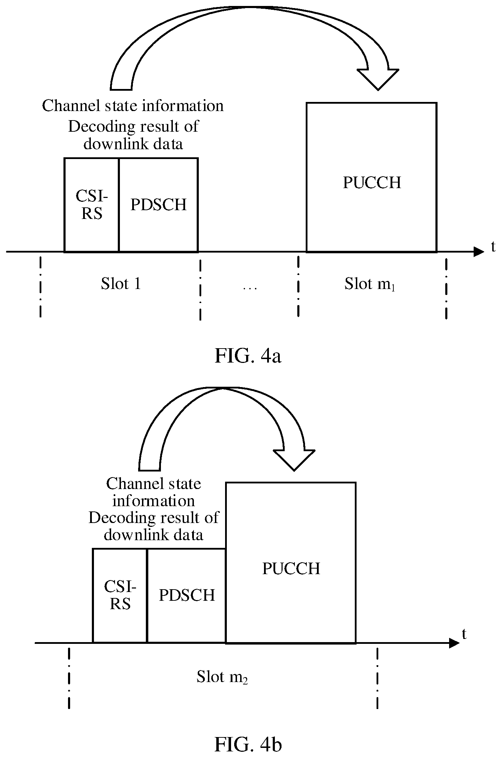

For example, FIG. 4a and FIG. 4b are diagrams of a time-frequency resource in a communication method according to this application. In FIG. 4a and FIG. 4b, an example in which a communication device is a terminal device is used to describe determining of the time-frequency resource. As shown in FIG. 4a, the terminal device may receive a CSI-RS and receive downlink data in a slot 1, and feed back CSI and a decoding result of the downlink data through a PUCCH in a subsequent slot m₁. In other words, receiving and feedback processes of the terminal device are in different time domain units. As shown in FIG. 4b, the terminal device may receive a CSI-RS and receive downlink data in a slot m₂, and feed back CSI and a decoding result of the downlink data through a PUCCH in the slot m₂. In other words, receiving and feedback processes of the terminal device are in a same time domain unit, for example, in the slot in FIG. 4a and FIG. 4b or the TTI or the symbol described above. In addition, preferably, there is no time interval or delay between the receiving and feedback processes.

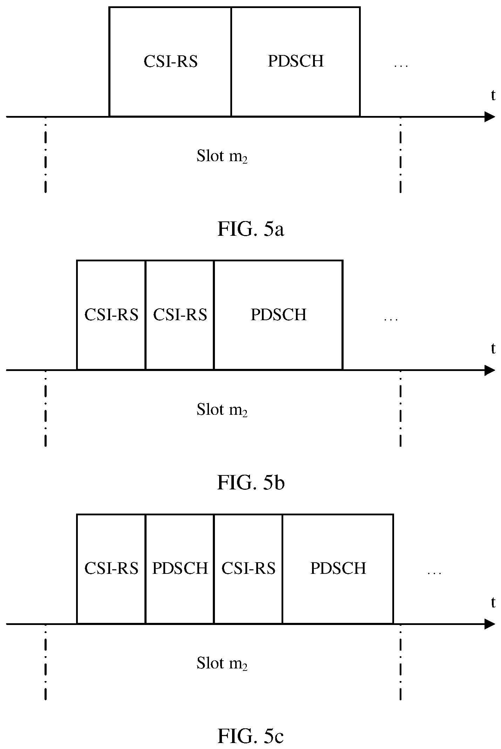

For example, FIG. 5a to FIG. 5d are diagrams of another time-frequency resource in a communication method according to this application. In FIG. 5a to FIG. 5d, an example in which a communication device is a terminal device is used to describe determining of the time-frequency resource. As shown in FIG. 5a, the terminal device may receive a CSI-RS once and receive downlink data once in a slot m₂, and time domain positions for receiving the CSI-RS once and receiving the downlink data once may be on one or more symbols in the slot m₂. As shown in FIG. 5b, the terminal device may consecutively receive a CSI-RS twice or more times and receive downlink data once in a slot m₂. In this way, when the terminal device cannot obtain CSI by measuring the CSI-RS once, the terminal device may obtain complete CSI by receiving and measuring the CSI-RS a plurality of times. As shown in FIG. 5c, the terminal device may receive a CSI-RS twice or more times and receive downlink data twice or more times in a slot m₂. For example, the terminal device may first receive and measure a CSI-RS once, then receive some downlink data of low importance from a network device, then receive and measure a CSI-RS once again to obtain complete CSI, and finally receive remaining downlink data from the network device. Preferably, in this embodiment of this application, the terminal device receives the downlink data from the network device after determining the CSI. In other words, a time domain position of the CSI-RS in a time domain unit precedes a time domain position of the downlink data in the time domain unit.

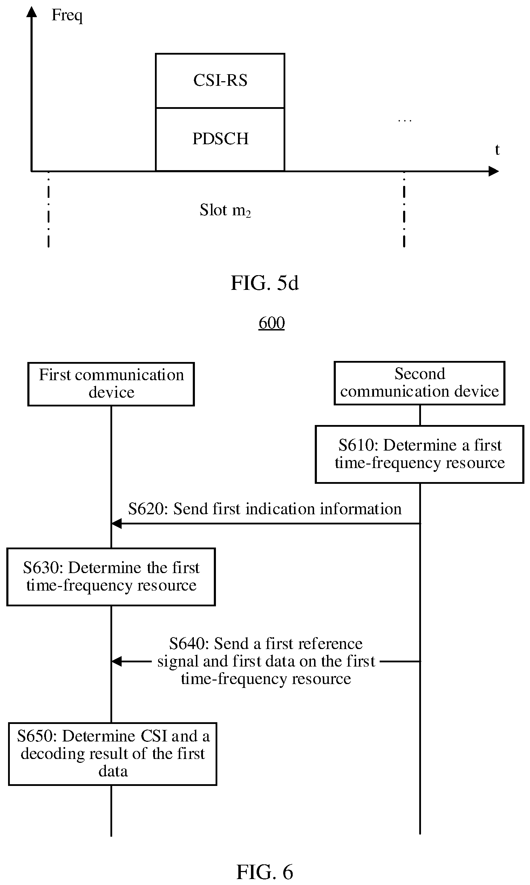

In other words, the time domain positions for the terminal device to receive the CSI-RS and the downlink data may be at different positions in a same time domain unit, for example, on different symbols in a same slot, and the CSI-RS and the downlink data may be received once or more times. As shown in FIG. 5d, time domain positions for the terminal device to receive a CSI-RS and downlink data may alternatively be at a same position in a same time domain unit. In this case, frequency domain positions for the terminal device to receive the CSI-RS and the downlink data are different, and distribution of the frequency domain positions may be in a frequency division multiplexing (frequency division multiplexing, FDM) form or a code division multiplexing (code division multiplexing, CDM) form.

Specifically, the distribution of the frequency domain positions shown in FIG. 5d is in the FDM form, that is, carrier bandwidth is divided into two sub-channels with different frequency bands, which are respectively used to receive the CSI-RS and the downlink data. Optionally, in another embodiment of this application, the CDM form may be that a plurality of sub-channels for receiving the CSI-RS and a plurality of sub-channels for receiving the downlink data are distributed alternately on a frequency band. For example, the carrier bandwidth may be divided into eight sub-channels with different frequency bands, and the sub-channels are arranged in a frequency division sequence as follows: a sub-channel #1 to a sub-channel #8. The sub-channel #1, the sub-channel #3, the sub-channel #5, and the sub-channel #7 may be used to receive the CSI-RS, and the sub-channel #2, the sub-channel #4, the sub-channel #6, and the sub-channel #8 may be used to receive the downlink data.

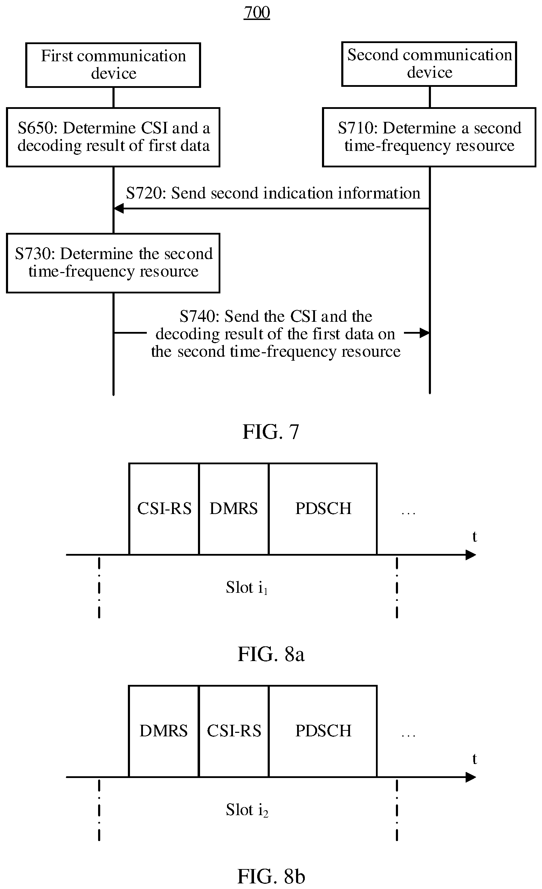

FIG. 6 is a schematic interaction flowchart of a communication method 600 according to an embodiment of this application. FIG. 7 is a schematic interaction flowchart of a communication method 700 according to an embodiment of this application. The communication method 600 includes step S610 to step S650, so that a communication device determines CSI and a decoding result of data. In the communication methods 600 and 700, a first communication device exchanges information with a second communication device. The first communication device may be a terminal device, and the second communication device may be a network device; or the first communication device may be a network device, and the second communication device may be a terminal device.

S610: The second communication device determines a first time-frequency resource.

It should be understood that the second communication device determines, by using step 610, time domain positions and/or frequency domain positions for sending a first reference signal and first data to the first communication device. In other words, the second communication device performs active determining in this step, and the first time-frequency resource carries the first reference signal and the first data.

In this embodiment of this application, the first time-frequency resource may be one TTI, one slot, or one symbol described above, or the first time-frequency resource is included in one TTI, one slot, or one symbol.

S620: The second communication device sends first indication information to the first communication device.

Correspondingly, the first communication device receives the first indication information from the second communication device. The first indication information indicates a time domain position and/or a frequency domain position for the second communication device to send the first reference signal on the first time-frequency resource and a time domain position and/or a frequency domain position for the second communication device to send the first data on the first time-frequency resource. In other words, the first indication information indicates a time domain position and/or a frequency domain position for the first communication device to receive the first reference signal on the first time-frequency resource and a time domain position and/or a frequency domain position for the first communication device to receive the first data on the first time-frequency resource.

Optionally, the first indication information may be included in the DCI shown in FIG. 3a and FIG. 3b. Further, step S620 may be that the second communication device sends the DCI to the first communication device, where the DCI includes the first indication information. In some other embodiments of this application, the first indication information may alternatively be included in radio resource control (radio resource control, RRC) signaling.

For example, the DCI may indicate a time domain position of downlink data on the first time-frequency resource by using a value of K0, where K0 is a slot offset between receiving the DCI and scheduling a PDSCH, in other words, receiving the first data, by the first communication device. The DCI may indicate a time domain position of the first reference signal like a CSI-RS on the first time domain resource by using a value of K0+offset. When a value of offset is 0, the CSI-RS and the PDSCH are multiplexed on a same time domain unit resource and are located on different frequency domain resources. When a value of offset is greater than 0 or less than 0, the time domain position of the CSI-RS precedes or follows a time domain position of the PDSCH.

S630: The first communication device determines the first time-frequency resource.

Specifically, the first communication device determines the first time-frequency resource based on the first indication information in step S620. In other words, the first communication device determines the time domain position and/or the frequency domain position for receiving the first reference signal on the first time-frequency resource and the time domain position and/or the frequency domain position for receiving the first data on the first time-frequency resource.

S640: The second communication device sends the first reference signal and the first data on the first time-frequency resource.

Correspondingly, the first communication device receives the first reference signal and the first data on the first time-frequency resource.

The first reference signal is used to determine channel state information CSI. The first reference signal may be the foregoing CSI-RS, or may be another reference signal, for example, a DMRS, used to determine channel information. A type of the first reference signal is not limited in this application.

When the second communication device is a terminal device and the first communication device is a network device, the first data may be uplink data. When the second communication device is a network device and the first communication device is a terminal device, the first data may be downlink data.

S650: The first communication device determines the CSI and a decoding result of the first data.

The first communication device determines the CSI based on the first reference signal, for example, obtains CSI of an uplink channel or a downlink channel by measuring the CSI-RS. The decoding result of the first data may be an ACK, and a value of the ACK may indicate whether the decoding result is correct. For example, when ACK=0, it indicates that the decoding result of the first data is correct, and when ACK=1, it indicates that the decoding result of the first data is incorrect.

The communication method 700 includes step S710 to step S740, so that a communication device feeds back CSI and a decoding result of data.

S710: The second communication device determines a second time-frequency resource.

The second time-frequency resource is used to carry first information, and the first information includes CSI and a decoding result of first data that are fed back by the first communication device to the second communication device. When the second communication device is a terminal device, the first information may be downlink information. When the second communication device is a network device, the first information may be uplink information.

Optionally, as shown in FIG. 4a, the second time-frequency resource may be separated from a first time-frequency resource by one or more time domain units. In other words, the first time domain resource and the second time-frequency resource are inconsecutive in terms of time domain positions. As shown in FIG. 4b, the second time-frequency resource and a first time domain resource may alternatively be the same, for example, may be a same slot m₂.

S720: The second communication device sends second indication information to the first communication device.

Correspondingly, the first communication device receives the second indication information from the second communication device.

The second indication information indicates a time domain position and/or a frequency domain position for the second communication device to receive the CSI and the decoding result of the first data on the second time-frequency resource. In other words, the second indication information indicates a time domain position and/or a frequency domain position for the first communication device to send the CSI and the decoding result of the first data on the second time-frequency resource.

Optionally, the second indication information may be included in the DCI shown in FIG. 3a and FIG. 3b. Further, step S720 may be that the second communication device sends the DCI to the first communication device, where the DCI includes the second indication information. In some other embodiments of this application, the second indication information may alternatively be included in radio resource control (radio resource control, RRC) signaling.

For example, the second indication information may include identification information of a hybrid automatic repeat request acknowledgment HARQ-ACK, and an ID of the HARQ-ACK may indicate a time domain position for the first communication device to feed back the CSI.

For another example, the DCI may indicate, by using a value of K0+offset+K1, the time domain position for the communication device to feed back the CSI and the decoding result of the first data on the first time-frequency resource, where K0 is a slot offset between receiving the DCI and receiving the first data by the communication device, and K1 is a slot offset between receiving the first data and scheduling a channel resource for data feedback by the first communication device. When a value of offset is 0, the time domain position for the communication device to feed back the CSI and the decoding result of the first data is a time domain position for scheduling the channel resource. When a value of offset is greater than 0, the time domain position for feeding back the CSI and the decoding result of the first data is after a time domain position for scheduling the channel resource.

S730: The first communication device determines the second time-frequency resource.

Specifically, the first communication device determines the second frequency domain resource based on the second indication information, in other words, determines a time domain position and/or a frequency domain position for sending, on the second frequency domain resource, the first information including the CSI and the decoding result of the first data.

S740: The first communication device sends the CSI and the decoding result of the first data on the second time-frequency resource.

Specifically, the second communication device receives the CSI and the decoding result of the first data on the second time-frequency resource. For example, when the second communication device is a network device like a base station, the network device may perform adaptative optimization on a downlink scheduling process based on received channel quality information in the scheduling process. The CSI and the decoding result of the first data may be carried in the first information. When the first communication device is a terminal device, the first information may be uplink information. When the first communication device is a network device, the first information may be downlink information.

In the technical solution shown in Embodiment 1, the second communication device sends the first reference signal and the first data to the first communication device on the first time-frequency resource like one TTI, one slot, or one symbol, thereby greatly reducing a total delay of obtaining CSI and data in the operation process shown in FIG. 3a and FIG. 3b. In addition, the second communication device simultaneously receives, on the second time-frequency resource, the CSI and the decoding result of the first data that are fed back by the first communication device, thereby greatly reducing a feedback delay in the operation process shown in FIG. 3a and FIG. 3b.

Optionally, the operation process shown in FIG. 3b can be used only after being activated through triggering by the communication device, or may not need triggering. For example, when time domain positions and/or frequency domain positions of the first reference signal and the first data are configured in DCI that needs to be sent by the second communication device, the first communication device and the second communication device may use, by default, the operation process shown in FIG. 3b. For another example, the second communication device may indicate, by using DCI, to work in an active state by using the operation process shown in FIG. 3b. For another example, the second communication device or the first communication device may use, through reporting of its own event, the operation process shown in FIG. 3b. For example, a condition for reporting the event may be an increase or a decrease of a measured channel path loss, a change in a user mobility measurement result of the terminal device, the foregoing outdated channel information, the foregoing synchronization timeout, or the like.

Optionally, in some other embodiments of this application, the working mode shown in FIG. 3a and the working mode shown in FIG. 3b may be switched to each other. For example, after the second communication device receives feedback and determines a channel change by using the working mode shown in FIG. 3b, the first communication device and the second communication device may switch to the working mode shown in FIG. 3a, to improve robustness of information exchange between the communication devices.

### Embodiment 2

Different from Embodiment 1, in Embodiment 2, the first time-frequency resource is further used to carry a second reference signal, and the second reference signal is used to demodulate a channel for sending or receiving the first data. In this embodiment of this application, the second reference signal may be a demodulation reference signal DMRS.

FIG. 8a to FIG. 8d show relationships between time domain positions of a first reference signal, a second reference signal, and first data on a first time-frequency resource according to an embodiment of this application. For ease of description, an example in which the first reference signal is a CSI-RS, the second reference signal is a DMRS, and the first data is downlink data transmitted on a PDSCH is used.

As shown in FIG. 8a, a time domain position of the CSI-RS may be before a time domain position of the DMRS. For example, both the DMRS and the CSI-RS may be configured at first several symbol positions in a slot i₁, so that after measuring the CSI-RS to obtain CSI and demodulating the PDSCH by using the DMRS, a communication device performs transmission of the first data, namely, the downlink data, through the PDSCH. In other words, preferably, the time domain positions of the DMRS and the CSI-RS on the first time-frequency resource are before the time domain position of the first data on the first time-frequency resource.

As shown in FIG. 8b, a time domain position of the CSI-RS may be precede a time domain position of the DMRS and precede a time domain position of the downlink data. For example, both the DMRS and the CSI-RS may be configured at first several symbol positions in a slot i₂.

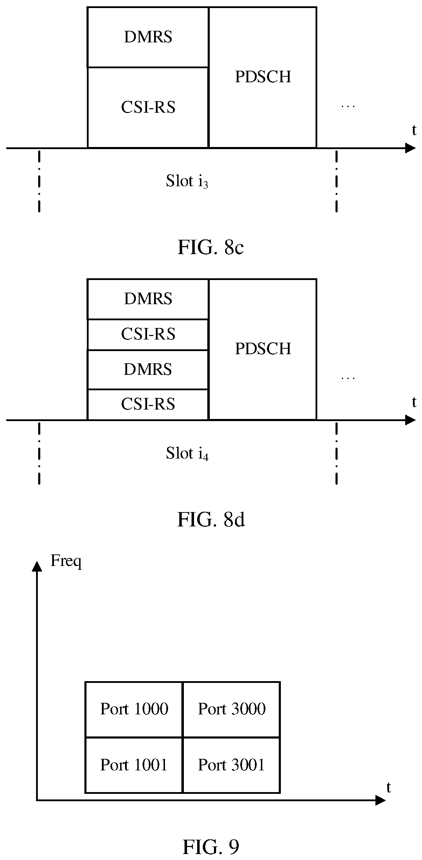

In this embodiment of this application, the time domain position of the CSI-RS may be the same as the time domain position of the DMRS. In this case, frequency domain positions of the CSI-RS and the DMRS are different. As shown in FIG. 8c, a frequency domain position of the CSI-RS and a frequency domain position of the DMRS have a frequency division multiplexing FDM form, that is, carrier bandwidth is divided into two sub-channels with different frequency bands, which are respectively used to receive the CSI-RS and the DMRS. As shown in FIG. 8d, a frequency domain position of the CSI-RS and a frequency domain position of the DMRS have a code division multiplexing CDM form, that is, carrier bandwidth is divided into four sub-channels with different frequency bands, where sub-channels used to receive the CSI-RS and sub-channels used to receive the DMRS are distributed alternately on a frequency band. It should be noted that FIG. 8c and FIG. 8d are merely examples, and a carrier frequency band may alternatively be divided into more sub-channels.

In Embodiment 1, the communication device may determine the CSI by using a first port (port) used to measure the first reference signal. In this case, a CSI feedback process is reporting a measurement result of the first port. In Embodiment 2, a measurement result may be reported based on an association between a first port and a second port, where the second port may be a port used to estimate channel information based on the second reference signal to demodulate a channel.

FIG. 9 is a diagram of a correspondence between a first port and a second port. As shown in FIG. 9, a first port port 1000 and a second port port 3000 have a same frequency domain position and close time domain positions, and a first port port 1001 and a second port port 3001 have a same frequency domain position and close time domain positions. Therefore, it may be determined that channel information measurement results of the port 1000 and the port 3000 are similar, and channel information measurement results of the port 1001 and the port 3001 are similar. Finally, a correspondence that the port 1000 corresponds to the port 3000 and the port 1001 corresponds to the port 3001 is determined. When the communication device needs channel information measurement results of four ports: second ports ports 3000 to 3003, the communication device may obtain the channel information measurement results of the four ports: the ports 3000 to 3003 by measuring four ports: the port 1000, the port 1001, the port 3002, and the port 3003.

In other words, each first port and a corresponding second port have a same frequency domain position and different time domain positions. In Embodiment 2, the communication device may determine measurement results of (K1+K2) first ports based on K1 first ports, K2 second ports, and the correspondence, where the K2 second ports correspond to K2 first ports, and K1 and K2 are integers. For example, K1 or K2 may be 0. To be specific, in this embodiment of this application, a plurality of second ports may be directly measured, and channel information measurement results of the plurality of second ports are used as channel information measurement results of a plurality of corresponding first ports, where the channel information measurement results are used to determine the CSI. Alternatively, in this embodiment of this application, a plurality of first ports may be directly measured, and channel information measurement results of the plurality of first ports are used as channel information measurement results of a plurality of corresponding second ports, where the channel information measurement results are used to demodulate the channel for transmission of the first data.

Optionally, a power offset between the first port and the second port may be determined by using a frequency domain density difference between the first reference signal like the CSI-RS and the second reference signal like the DMRS. For example, this embodiment of this application provides Table 1. Table 1 indicates a correspondence between a power offset and frequency domain arrangement of two reference signals. As shown in Table 1, that frequency domain density of the first reference signal and frequency domain density of the second reference signal are consistent corresponds to a type 1 in the table, that is, an actual power offset between the first reference signal and the second reference signal is 0. That there is a one-fold difference between frequency domain density of the first reference signal and frequency domain density of the second reference signal corresponds to a type 2 in the table. In this case, an actual power offset between the two reference signals is 3 dB.

**Table 1**

| Frequency domain density difference degree | Type 1 | Type 2 | ... |
|---|---|---|---|
| Power offset | 0 | 3 dB | ... |

It should be noted that Table 1 may further include more types. For example, frequency domain density of the two reference signals may differ by more times, which corresponds to more types, thereby corresponding to higher actual power offsets. This is not limited in this specification.

### Embodiment 3

It can be learned from Embodiment 2 that, in the interaction processes shown in FIG. 6 and FIG. 7, the first communication device may measure the first reference signal by using the first port, to obtain channel information, so as to determine CSI, and may estimate the channel information by using the second port, to demodulate the channel for transmission of the first data. A quantity of first ports and a quantity of second ports affect a delay of obtaining the channel information by the first communication device.

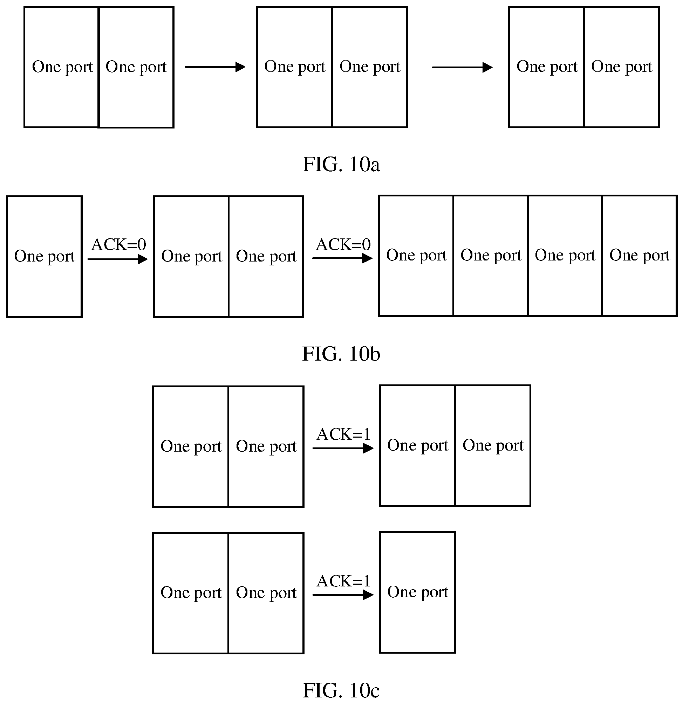

FIG. 10a to FIG. 10c are diagrams of a change of a quantity of ports of a communication device. FIG. 10a shows a current port configuration manner of a communication device, that is, the communication device always uses a same quantity of ports to measure a channel. This embodiment of this application shows a method for adjusting a quantity of measurement ports of the communication device. To be specific, the first communication device may adjust, based on the decoding result of the first data obtained in step S650, the quantity of first ports or second ports used to measure a channel.

It should be understood that an adjusted quantity of first ports or second ports are used in a next operation process of the communication device. To be specific, when re-performing the operation process shown in FIG. 3a and FIG. 3b, the communication device uses the adjusted quantity of first ports or second ports to measure the channel.

As shown in FIG. 10b, ACK=0 indicates that the decoding result of the first data is correct. In this case, the first communication device may progressively increase the quantity of first ports or second ports, for example, increase the quantity from one port to two ports, and then increase the quantity from two ports to four ports. Progressively increasing the quantity of measurement ports can reduce a processing delay and resource configuration overheads, and also reduce feedback overheads. In this embodiment of this application, the quantity of first ports or second ports may alternatively be increased to eight ports or more, but correspondingly, a channel measurement delay gradually increases. Similarly, as shown in FIG. 10c, ACK=1 indicates that the decoding result of the first data is incorrect. In this case, the first communication device may progressively reduce the quantity of first ports or second ports or keep the quantity unchanged, for example, reduce the quantity from two ports to one port, or keep the quantity unchanged at two ports.

Optionally, in this embodiment of this application, a plurality of measurement resources or a plurality of time-frequency resources of a reference signal may be configured, and the plurality of measurement resources respectively correspond to different quantities of ports. In this way, the first communication device may adjust the quantity of first ports or second ports by adjusting a measurement resource of the first reference signal or the second reference signal. For example, DCI received by the first communication device indicates that in a symbol *x*1, the first communication device measures channel information by using one port; in a symbol *x*2, the first communication device measures channel information by using two ports; and in a symbol *x*3, the first communication device measures channel information by using four ports. Further, as shown in FIG. 10b, when ACK=0, the first communication device may adjust the measurement resource or a time-frequency resource of the first reference signal from the symbol *x*1 to the symbol *x*2, in other words, switch from the symbol *x*1 to the symbol *x*2, so that a quantity of first ports used in a next operation process of the first communication device is adjusted from one port to two ports. Similarly, the first communication device adjusts the measurement resource or a time-frequency resource of the first reference signal from the symbol *x*3 to the symbol *x*2, so that a quantity of first ports used in a next operation process of the first communication device is adjusted from four ports to two ports.

It should be noted that the foregoing manner of indicating a plurality of measurement resources or a plurality of time-frequency resources by using the DCI is merely an example. The manner of indicating the plurality of measurement resources or the plurality of time-frequency resources is not limited in this application. For example, the plurality of measurement resources or the plurality of time-frequency resources may alternatively be indicated according to a predefined rule.

### Embodiment 4

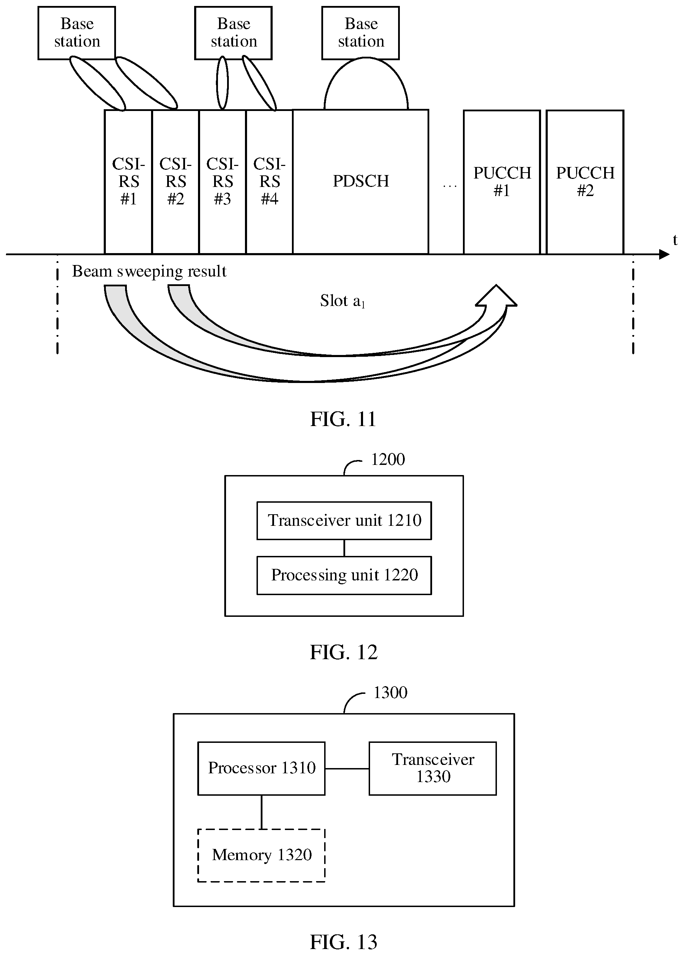

FIG. 11 is a diagram of beam sweeping according to an embodiment of this application. In FIG. 11, an example in which a communication device is a terminal device is used. In the operation process of this embodiment of this application shown in FIG. 3b, beam sweeping may be performed on a measurement resource or a time-frequency resource of the first reference signal like a CSI-RS by using a narrow beam, and beam sweeping may be performed on a time-frequency resource of the first data by using a wide beam, to ensure data transmission quality. For example, as shown in FIG. 11, the terminal device measures the CSI-RS four times on four time domain resources: a CSI-RS #1 to a CSI-RS #4 respectively. In this case, the communication device may separately perform beam sweeping on the four time domain resources by using a narrow beam, and perform, by using a wide beam, beam sweeping on a time domain resource for scheduling a PDSCH, to obtain a plurality of beam sweeping results.

Optionally, in a beam sweeping process, quantities of first ports used by the communication device on the four time domain resources: the CSI-RS #1 to the CSI-RS #4 are fixed to 1. This is because the beam sweeping results are not accurate enough in this case, and port resources are wasted if excessive first ports are used.

Optionally, the four time domain resources: the CSI-RS #1 to the CSI-RS #4 may all be included in one symbol, but are distributed in four different symbols. In this way, it can be ensured that time domain positions of different time domain resources do not overlap, and feedback overheads are low. For example, start slots of the four time domain resources are the same, and DCI received by the communication device separately indicates four different offset values, so that time domain positions of the four time domain resources do not overlap.

After obtaining the plurality of beam sweeping results, the communication device needs to report or feed back the beam sweeping results by using uplink information or downlink information. A process thereof is similar to the foregoing process of feeding back the CSI and the decoding result of the first data. However, the communication device further needs to feed back both the CSI and the decoding result of the first data by using one piece of uplink information or one piece of downlink information. Therefore, in this case, channel resources are limited, beam sweeping result reporting may fail to be completed at a time, and one or more pieces of additional uplink information or downlink information need to be used to feed back the beam sweeping results.

Therefore, as shown in FIG. 11, in the example in which the communication device is the terminal device, the beam sweeping results may be fed back by configuring at least two pieces of uplink information or at least two PUCCHs. For example, a same K1 value may be configured for the four time domain resources: the CSI-RS #1 to the CSI-RS #4, so that results obtained by performing beam sweeping on the four time domain resources may be reported by using four different time domain positions of a same PUCCH, and the first information may be reported through another PUCCH. Alternatively, different K1 values may be configured for the four time domain resources: the CSI-RS #1 to the CSI-RS #4, and the different K1 values are in one-to-one correspondence with different uplink information or PUCCHs. As shown in FIG. 11, two different K1 values may be configured. Time domain resources: the CSI-RS #1 and the CSI-RS #2 correspond to one K1, and results obtained by performing beam sweeping on the time domain resources: the CSI-RS #1 and the CSI-RS #2 are reported or fed back through a PUCCH #1. Time domain resources: the CSI-RS #3 and the CSI-RS #4 correspond to the other K1, and results obtained by performing beam sweeping on the time domain resources: the CSI-RS #3 and the CSI-RS #4 are reported or fed back through a PUCCH #2.

It should be noted that FIG. 11 is merely an example. The first reference signal like a CSI-RS in FIG. 11 may alternatively be replaced with the second reference signal like a DMRS. In this embodiment of this application, more time domain resources used to measure the first reference signal or the second reference signal and more uplink information or downlink information used for reporting and feedback may be included.

The foregoing describes in detail the communication methods provided in embodiments of this application with reference to FIG. 3a to FIG. 11. The following describes in detail communication apparatuses provided in embodiments of this application with reference to FIG. 12 to FIG. 14, which are configured to implement the communication methods shown in FIG. 3a to FIG. 11. It should be understood that descriptions of apparatus embodiments correspond to the descriptions of the method embodiments. Therefore, for content that is not described in detail, refer to the foregoing method embodiments. For brevity, details of a part of content are not described again.

FIG. 12 is a block diagram of a communication apparatus according to an embodiment of this application. The apparatus 1200 includes a transceiver unit 1210, and the transceiver unit 1210 may be configured to implement a corresponding communication function. The transceiver unit 1210 may also be referred to as a communication interface or a communication unit.

Optionally, the apparatus 1200 may further include a processing unit 1220, and the processing unit 1220 may be configured to perform data processing.

Optionally, the apparatus 1200 further includes a storage unit. The storage unit may be configured to store instructions and/or data. The processing unit 1220 may read the instructions and/or the data in the storage unit, to cause the apparatus to implement actions of different communication devices in the foregoing method embodiments, for example, actions of the first communication device or the second communication device.

The apparatus 1200 may be configured to perform the actions performed by the first communication device or the second communication device in the foregoing method embodiments. In this case, the apparatus 1200 may be the first communication device or the second communication device, or a component of the first communication device or the second communication device. The transceiver unit 1210 is configured to perform receiving and sending-related operations of the first communication device or the second communication device in the foregoing method embodiments. The processing unit 1220 is configured to perform processing-related operations of the first communication device or the second communication device in the foregoing method embodiments.

It should be further understood that the apparatus 1200 herein is embodied in a form of a functional unit. The term "unit" herein may be an application-specific integrated circuit (application-specific integrated circuit, ASIC), an electronic circuit, a processor (for example, a shared processor, a dedicated processor, or a group processor) configured to execute one or more software or firmware programs, a memory, a merged logic circuit, and/or another appropriate component that supports the described function. In an optional example, a person skilled in the art may understand that the apparatus 1200 may be specifically the first communication device or the second communication device in the foregoing embodiments, and may be configured to perform procedures and/or steps corresponding to the first communication device or the second communication device in the foregoing method embodiments. To avoid repetition, details are not described herein again.

The apparatus 1200 in the foregoing solutions has a function of implementing corresponding steps performed by the first communication device or the second communication device in the foregoing methods. The function may be implemented by hardware, or may be implemented by hardware executing corresponding software. The hardware or the software includes one or more modules corresponding to the foregoing function. For example, the transceiver unit may be replaced with a transceiver (for example, a sending unit in the transceiver unit may be replaced with a transmitter, and a receiving unit in the transceiver unit may be replaced with a receiver), and another unit, for example, the processing unit, may be replaced with a processor, to respectively perform receiving and sending operations and related processing operations in the method embodiments.

In addition, the transceiver unit 1210 may alternatively be a transceiver circuit (for example, may include a receiving circuit and a sending circuit), and the processing unit may be a processing circuit.

It should be noted that the apparatus in FIG. 12 may be the communication device in the foregoing embodiments, or may be a chip or a chip system, for example, a system on chip (system on chip, SoC). The transceiver unit may be an input/output circuit or a communication interface. The processing unit is a processor, a microprocessor, or an integrated circuit integrated on the chip. This is not limited herein.

As shown in FIG. 13, an embodiment of this application provides another communication apparatus 1300. The apparatus 1300 includes a processor 1310. The processor 1310 is coupled to a memory 1320, the memory 1320 is configured to store a computer program or instructions and/or data, and the processor 1310 is configured to execute the computer program or the instructions stored in the memory 1320, or read the data stored in the memory 1320, to perform the method in the foregoing method embodiments.

Optionally, there are one or more processors 1310.

Optionally, there are one or more memories 1320.

Optionally, the memory 1320 and the processor 1310 are integrated together, or are disposed separately.

Optionally, as shown in FIG. 13, the apparatus 1300 further includes a transceiver 1330, and the transceiver 1330 is configured to receive and/or send a signal. For example, the processor 1310 is configured to control the transceiver 1330 to receive and/or send the signal.

In a solution, the apparatus 1300 is configured to implement operations performed by the first communication device or the second communication device in the foregoing method embodiments.

For example, the processor 1310 is configured to execute the computer program or the instructions stored in the memory 1320, to implement related operations of the communication device in the foregoing method embodiments, for example, the first communication device or the second communication device in any one of the embodiments shown in FIG. 3a to FIG. 11, or the method of the first communication device or the second communication device in any one of the embodiments shown in FIG. 3a to FIG. 11.

It should be understood that the processor mentioned in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or transistor logic device, a discrete hardware component, or the like. The general-purpose processor may be a microprocessor, or the processor may be any conventional processor or the like.

It should be further understood that the memory mentioned in embodiments of this application may be a volatile memory and/or a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM). For example, the RAM may be used as an external cache. By way of example, but not limitation, the RAM includes the following plurality of forms: a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

It should be noted that when the processor is a general-purpose processor, a DSP, an ASIC, an FPGA or another programmable logic device, a discrete gate or transistor logic device, or a discrete hardware component, the memory (a storage module) may be integrated into the processor.

It should be further noted that the memory described in this specification is intended to include but not limited to these memories and any memory of another proper type.

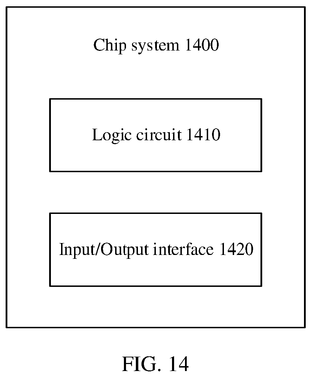

As shown in FIG. 14, an embodiment of this application provides a chip system 1400. The chip system 1400 (or may be referred to as a processing system) includes a logic circuit 1410 and an input/output interface (input/output interface) 1420.

The logic circuit 1410 may be a processing circuit in the chip system 1400. The logic circuit 1410 may be coupled to a storage unit, and invoke instructions in the storage unit, to cause the chip system 1400 to implement the methods and functions in embodiments of this application. The input/output interface 1420 may be an input/output circuit in the chip system 1400, and outputs information processed by the chip system 1400, or inputs to-be-processed data or signaling information into the chip system 1400 for processing.

In a solution, the chip system 1400 is configured to implement operations performed by the first communication device or the second communication device in the foregoing method embodiments.

For example, the logic circuit 1410 is configured to implement processing-related operations of the first communication device or the second communication device in the foregoing method embodiments, for example, processing-related operations of the first communication device or the second communication device in any one of the embodiments shown in FIG. 3a to FIG. 11. The input/output interface 1420 is configured to implement sending and/or receiving-related operations of the first communication device or the second communication device in the foregoing method embodiments, for example, sending and/or receiving-related operations performed by the first communication device or the second communication device in any one of the embodiments shown in FIG. 3a to FIG. 11.

An embodiment of this application further provides a computer-readable storage medium. The computer-readable storage medium stores computer instructions used to implement the method performed by the first communication device or the second communication device in the foregoing method embodiments.

For example, when the computer program is executed by a computer, the computer is caused to implement the method performed by the first communication device or the second communication device in the foregoing method embodiments.

An embodiment of this application further provides a computer program product, including instructions. When the instructions are executed by a computer, the method performed by the first communication device or the second communication device in the foregoing method embodiments is implemented.

For explanations and beneficial effects of related content of any one of the apparatuses provided above, refer to the corresponding method embodiments provided above. Details are not described herein again.

In the several embodiments provided in this application, it should be understood that the disclosed apparatuses and methods may be implemented in other manners. For example, the described apparatus embodiments are merely examples. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or another form.

All or some of the foregoing embodiments may be implemented by software, hardware, firmware, or any combination thereof. When the software is used for implementation, all or some of embodiments may be implemented in a form of a computer program product. The computer program product includes one or more computer instructions. When the computer program instructions are loaded and executed on a computer, the procedures or functions according to embodiments of this application are all or partially generated. The computer may be a general-purpose computer, a dedicated computer, a computer network, or another programmable apparatus. For example, the computer may be a personal computer, a server, a network device, or the like. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (solid-state drive, SSD)), or the like. For example, the usable medium includes but is not limited to any medium that can store program code, for example, a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, comprising:
determining a first time-frequency resource, wherein the first time-frequency resource is used to carry a first reference signal and first data, and the first reference signal is used to determine channel state information CSI; and
on the first time-frequency resource, receiving the first reference signal to determine the CSI, and receiving the first data.

2. The method according to claim 1, wherein the first time-frequency resource is comprised in one transmission time interval TTI, or comprised in one slot, or comprised in one symbol.

3. The method according to claim 1 or 2, wherein a time domain position of the first reference signal on the first time-frequency resource precedes a time domain position of the first data on the first time-frequency resource.

4. The method according to any one of claims 1 to 3, wherein the determining the first time-frequency resource comprises:
receiving first indication information, wherein the first indication information indicates the time domain position and/or a frequency domain position for receiving the first data on the first time-frequency resource and the time domain position and/or a frequency domain position for receiving the first reference signal on the first time-frequency resource; and
determining the first time-frequency resource based on the first indication information.

5. The method according to claim 4, wherein the first indication information is comprised in downlink control information DCI or radio resource control RRC signaling.

6. The method according to any one of claims 1 to 5, wherein the first time-frequency resource is further used to carry first information, and the first information comprises the CSI and a decoding result of the first data.

7. The method according to any one of claims 1 to 5, wherein the method further comprises:
determining a second time-frequency resource, wherein the second time-frequency resource is used to carry first information, and the first information comprises the CSI and a decoding result of the first data.

8. The method according to claim 7, wherein the determining the second time-frequency resource comprises:
receiving second indication information, wherein the second indication information indicates a time domain position and/or a frequency domain position for sending the first information on the second time-frequency resource; and
determining the second time-frequency resource based on the second indication information.

9. The method according to claim 8, wherein the second indication information is comprised in DCI, or the second indication information comprises identification information of a hybrid automatic repeat request acknowledgment HARQ-ACK.

10. The method according to any one of claims 1 to 9, wherein the first time-frequency resource is further used to carry a second reference signal, and the second reference signal is used to demodulate a channel over which the first data is received.

11. The method according to claim 10, wherein a time domain position of the second reference signal on the first time-frequency resource is different from the time domain position of the first reference signal on the first time-frequency resource; or a time domain position of the second reference signal on the first time-frequency resource is the same as the time domain position of the first reference signal on the first time-frequency resource, and the frequency domain position of the first reference signal on the first time-frequency resource and a frequency domain position of the second reference signal on the first time-frequency resource have a frequency division multiplexing FDM form or a code division multiplexing CDM form.

12. The method according to claim 10 or 11, wherein the method further comprises:
obtaining a first correspondence between a plurality of first ports and a plurality of second ports, wherein the first ports are used to determine the CSI, the second ports are used to demodulate the channel over which the first data is received, and each first port and a corresponding second port have a same frequency domain position but different time domain positions; and
determining measurement results of (K1+K2) first ports based on K1 first ports in the plurality of first ports, K2 second ports in the plurality of second ports, and the first correspondence, wherein the K2 second ports correspond to K2 first ports, and K1 and K2 are integers.

13. The method according to any one of claims 10 to 12, wherein the method further comprises:
determining a power offset between the first port and the second port based on frequency domain density of the first reference signal and frequency domain density of the second reference signal, wherein the first port is used to determine the CSI, and the second port is used to demodulate the channel over which the first data is received.

14. The method according to any one of claims 1 to 13, wherein the method further comprises:
adjusting a quantity of first ports based on the decoding result of the first data, wherein the first port is used to determine the CSI.

15. The method according to any one of claims 1 to 14, wherein before determining the first time-frequency resource, the method further comprises:
receiving a first wake-up signal, wherein the first wake-up signal is used to activate a terminal device or a network device.

16. A communication method, comprising:
determining a first time-frequency resource, wherein the first time-frequency resource is used to carry a first reference signal and first data, and the first reference signal is used to determine channel state information CSI; and
on the first time-frequency resource, sending the first reference signal, and sending the first data.

17. The method according to claim 16, wherein the first time-frequency resource is comprised in one transmission time interval TTI, or comprised in one slot, or comprised in one symbol.

18. The method according to claim 16 or 17, wherein a time domain position of the first reference signal on the first time-frequency resource precedes a time domain position of the first data on the first time-frequency resource.

19. The method according to any one of claims 16 to 18, wherein the method further comprises:
sending first indication information, wherein the first indication information indicates the time domain position and/or a frequency domain position for sending the first data on the first time-frequency resource and the time domain position and/or a frequency domain position for sending the first reference signal on the first time-frequency resource.

20. The method according to claim 19, wherein the first indication information is comprised in downlink control information DCI or radio resource control RRC signaling.

21. The method according to any one of claims 16 to 20, wherein the first time-frequency resource is further used to carry first information, and the first information comprises the CSI and a decoding result of the first data.

22. The method according to any one of claims 16 to 21, wherein the method further comprises:
sending second indication information, wherein the second indication information indicates a time domain position and/or a frequency domain position for receiving the first information on the second time-frequency resource, and the first information comprises the CSI and the decoding result of the first data.

23. The method according to any one of claims 16 to 22, wherein the first time-frequency resource is further used to carry a second reference signal, and the second reference signal is used to demodulate a channel over which the first data is sent.

24. The method according to claim 23, wherein a time domain position of the second reference signal on the first time-frequency resource is different from the time domain position of the first reference signal on the first time-frequency resource; or a time domain position of the second reference signal on the first time-frequency resource is the same as the time domain position of the first reference signal on the first time-frequency resource, and the frequency domain position of the first reference signal on the first time-frequency resource and a frequency domain position of the second reference signal on the first time-frequency resource have a frequency division multiplexing FDM form or a code division multiplexing CDM form.

25. The method according to any one of claims 16 to 24, wherein before determining the first time-frequency resource, the method further comprises:
sending a first wake-up signal, wherein the first wake-up signal is used to activate a network device or a terminal device.

26. A communication apparatus, comprising a processor, wherein the processor is configured to execute a program or instructions, to cause the apparatus to perform the method according to any one of claims 1 to 15.

27. A communication apparatus, comprising a processor, wherein the processor is configured to execute a program or instructions, to cause the apparatus to perform the method according to any one of claims 16 to 25.

28. A communication system, comprising the communication apparatus according to claim 26 and the communication apparatus according to claim 27.

29. A computer-readable storage medium, wherein the computer-readable storage medium stores a computer program, and when the computer program is executed by a computer, the computer is caused to perform the method according to any one of claims 1 to 15 or the method according to any one of claims 16 to 25.

30. A computer program product, comprising computer program code, wherein when the computer program code is executed, the method according to any one of claims 1 to 15 or the method according to any one of claims 16 to 25 is implemented.
